# EUROPEAN PATENT SPECIFICATION

(11) **EP 3 866 272 B1**
(45) Date of publication and mention of the grant of the patent: **23.08.2023**
(21) Application number: 21156301.0
(22) Date of filing: 10.02.2021
(51) Int. Cl.: H01R 12/72, H01R 13/504, H01R 13/6471, H01R 13/6585, H01R 43/20

(54) **HIGH-SPEED TRANSMISSION CONNECTOR**
HOCHGESCHWINDIGKEITSÜBERTRAGUNGSSTECKER
CONNECTEUR POUR TRANSMISSION À GRANDE VITESSE

(30) Priority: 14.02.2020 CN 202010092841
(43) Date of publication of application: 18.08.2021
(73) Proprietor: Yamaichi Electronics Co., Ltd., Tokyo 144-8581 (JP)
(72) Inventor: ISHII, Yoshiharu, Tokyo, 1448581 (JP)
(74) Representative: Ipside

(56) References cited:
- US-B1- 10 050 369
- US-B1- 10 236 645

## Description

### Technical Field

The present invention relates to a high-speed transmission connector mounted on a circuit board.

### Background of the Invention

A Quad Small Form Factor Pluggable-Double Density (QSFP-DD) connector has a total of four rows of contacts, upper front and rear rows and lower front and rear rows, in a slot that accommodates a header of a module as a communicating counterpart. The QSFP-DD connector can transmit signals of up to 8 channels at high speed via these 4 rows of contacts. As an example of documents disclosing a technique related to this type of connector, United States Patent Application Publication No. US2019/0131743A1 (hereinafter referred to as "Patent Document 1") can be taken up. The electric connector disclosed in Patent Document 1 includes a laminate of an upper contact module and a lower contact module , which is disposed between a bottom wall and an upper wall facing each other across a fitting slot in the housing, the upper contact module including a first contact and a second contact, and the lower contact module including a third contact and a fourth contact; and contact portions, which are the front ends of the first contact and the second contact, face each other in a vertical direction on the front side in the fitting slot, contact portions, which are the front ends of the third contact and the fourth contact, face each other in a vertical direction on the rear side in the fitting slot, and attachment portions, which are the rear ends of the first to fourth contacts, are exposed downward from an opening under the bottom wall. Patent document US10 236 645 B1 discloses an electrical connector according to the preamble of claim 1, said connector including a terminal module and a housing receiving the terminal module therein. The terminal module includes a first, a second, a third and a fourth terminal module, which include a first, a second, a third and a fourth terminal unit, respectively. The second and the third terminal unit are located at a distance behind the first and the fourth terminal unit. At least one of the first, the second, the third and the fourth terminal unit includes one ground terminal and two signal terminals arranged on at least one lateral side thereof from an outmost position to two inner positions. The housing includes an upper cover and a lower cover that are connected and closed to each other; the lower cover includes a hollow-out area, in which a connection end of each of the first, the second, the third and the fourth terminal unit is received. Patent document US 10 050 369 B1 discloses an electrical connector including a terminal module comprising a connecting element that is integrally formed.

### Summary of the Invention

The invention is set out in the appended set of claims

However, in the technique of Patent Document 1, since a structure in which the upper contact module and the lower contact module are stacked on the lower wall and fixed by the upper wall is adopted, such a structure has difficulty in part assembling, causing a problem that the dimensional stability and contact reliability are low.

The present invention has been made in view of such a problem, and one of the objects of the present invention is to provide a QSFP-DD high-speed transmission connector which facilitates part assembling and has high dimensional stability and contact reliability.

An independent aspect for solving this task relates to a high-speed transmission connector. The high-speed transmission connector includes: a row of first contacts, a row of second contacts, a row of third contacts, a row of fourth contacts, an upper housing that supports the row of first contacts, a lower housing that supports the row of second contacts, and an inner housing that supports the row of third contacts and the row of fourth contacts. The upper housing, the lower housing, and the inner housing are assembled in such a manner that the upper housing and the lower housing face each other in a vertical direction with a gap therebetween, and the inner housing is accommodated in the upper housing and the lower housing. The gap and an opening of the inner housing form a slot into which a header of a device as a communicating counterpart is to be fitted. According to the invention, the inner housing is integrally formed.

In this aspect, the upper housing may have a row of first grooves, each of which extends longitudinally and which are arranged laterally, the lower housing may have a row of second grooves, each of which extends longitudinally and which are arranged laterally, the inner housing may have a row of first holes and a row of second holes, each of which extends longitudinally and which are vertically divided, the holes in each row being arranged laterally, the first contacts may be press-fitted into the first grooves, the second contacts may be press-fitted into the second grooves, the third contacts may be inserted into the first holes, and the fourth contacts may be inserted into the second holes.

Further, a contact portion of the first contact that contacts a header of a device as a communicating counterpart and a contact portion of the second contact that contacts the header of the device as a communicating counterpart may face each other in a vertical direction in the slot, and a contact portion of the third contact that contacts the header of the device as a communicating counterpart and a contact portion of the fourth contact that contacts the header of the device as a communicating counterpart may face each other in a vertical direction in the slot on the further rear side than a position where the contact portion of the first contact and the contact portion of the second contact face each other.

Further, the plurality of first contacts press-fitted into the grooves in the row of the first grooves may include a plurality of first ground contacts and a plurality of first signal contacts, the high-speed transmission connector may include a first conductive member having a horizontal plate portion extending laterally and a plurality of protrusions rising from one surface of the horizontal plate portion, and the plurality of protrusions of the first conductive member may be in contact with or electrically connected to the plurality of first ground contacts.

Further, the plurality of third contacts inserted into the holes in the row of first holes may include a plurality of third ground contacts and a plurality of third signal contacts, the high-speed transmission connector may further includes a third conductive member having a horizontal plate portion extending laterally and a plurality of protrusions rising from one surface of the horizontal plate portion, and the plurality of protrusions of the third conductive member may be in contact with or electrically connected to the plurality of third ground contacts.

Further, the first conductive member may be arranged below the first contacts, the third conductive member may be arranged above the third contacts, and a first shielding plate may be arranged between the first conductive member and the third conductive member.

Further, the plurality of second contacts press-fitted into the grooves in the row of second grooves may include a plurality of second ground contacts and a plurality of second signal contacts, the high-speed transmission connector may further includes a second conductive member having a horizontal plate portion extending laterally and a plurality of protrusions rising from one surface of the horizontal plate portion, and the plurality of protrusions of the second conductive member may be in contact with or electrically connected to the plurality of second ground contacts.

Further, the plurality of fourth contacts inserted into the holes in the row of second holes may include a plurality of fourth ground contacts and a plurality of fourth signal contacts, the high-speed transmission connector may further includes a fourth conductive member having a horizontal plate portion extending laterally and a plurality of protrusions rising from one surface of the horizontal plate portion, and the plurality of protrusions of the fourth conductive member may be in contact with or electrically connected to the plurality of fourth ground contacts.

Further, the second conductive member may be arranged above the second contacts, the fourth conductive member may be arranged below the fourth contact, and a second shielding plate may be arranged between the second conductive member and the fourth conductive member.

Further, the lower housing may have a pair of side plate portions facing each other in a lateral direction with the inner housing therebetween, a first alignment plate having a row of grooves recessed in a comb blade shape may be arranged on the rear side of the inner housing between the pair of side plate portions, and a rear part of a straight portion of the first contact press-fitted into the first groove of the upper housing may be advanced to a position above the first alignment plate at which the rear part is hanged down, pass through the groove of the first alignment plate, and reach a lower side of a gap between the pair of side plate portions of the lower housing.

Moreover, a second alignment plate having a row of grooves recessed in a comb blade shape may be arranged on the rear side of the inner housing between the pair of side plate portions and on the front side of the first alignment plate, a rear part of a straight portion of the third contact inserted into the first hole of the inner housing may be advanced to a position above the second alignment plate at which the rear part is hanged down, pass through the groove of the second alignment plate, and reach the lower side of the gap between the pair of side plate portions of the lower housing.

### Brief description of the Drawings

FIG. 1 is a perspective view of a high-speed transmission connector 6 according to an embodiment of the present invention.
FIG. 2 is a perspective view of the high-speed transmission connector 6 of FIG. 1 as viewed from another angle.
FIG. 3A is a view of the high-speed transmission connector 6 of FIGS. 1 and 2 as viewed from the + Z side;
FIG. 3B is a view of the high-speed transmission connector 6 of FIGS. 1 and 2 as viewed from the + X side;
FIG. 3C is a view of the high-speed transmission connector 6 of FIGS. 1 and 2 as viewed from the -Y side;
FIG. 3D is a sectional view taken along line A-A in FIG. 3A;
FIG. 3E is a sectional view taken along line B-B in FIG. 3A;
FIG. 4A is a perspective view of an optical transceiver 5 fitted to the high-speed transmission connector 6 of FIGS. 1 and 2;
FIG. 4B is a view showing a header 7 of FIG. 4A is exposed;
FIG. 4C is an enlarged view of the header 7 of FIG. 4B;
FIG. 5is a perspective view of contacts 1a-k (k = 1 to 11), 1b-k (k = 1 to 11), 1c-k (k = 1 to 11), and 1d-k (k = 1 to 11) of FIGS. 1 and 2;
FIG. 6 is a perspective view of contacts 1a-k (k = 1 to 11), 1b-k (k = 1 to 11), 1c-k (k = 1 to 11), and 1d-k (k = 1 to 11) of FIGS. 1 and 2 as viewed from another angle;
FIG. 7 is a six-surface view of contacts 1a-k (k = 1 to 11), 1b-k (k = 1 to 11), 1c-k (k = 1 to 11), and 1d-k (k = 1 to 11) of FIGS. 5 and 6;
FIG. 8 is a perspective view of an upper housing 500 of FIGS. 1 and 2;
FIG. 9 is a perspective view of the upper housing 500 of FIGS. 1 and 2 as viewed from another angle;
FIG. 10 is a six-surface view of the upper housing 500 of FIGS. 8 and 9;
FIG. 11 is a perspective view of a lower housing 600 of FIGS. 1 and 2;
FIG. 12 is a perspective view of the lower housing 600 of FIGS. 1 and 2 as viewed from another angle;
FIG. 13 is a six-surface view of the lower housing 600 of FIGS. 11 and 12;
FIG. 14 is a perspective view of an inner housing 400 of FIGS. 1 and 2;
FIG. 15 is a perspective view of the inner housing 400 of FIGS. 1 and 2 as viewed from another angle;
FIG. 16 is a six-surface view of the inner housing 400 of FIGS. 14 and 15;
FIG. 17 is a perspective view of a conductive member 510 of FIGS. 1 and 2;
FIG. 18 is a perspective view of the conductive member 510 of FIGS. 1 and 2 as viewed from another angle;
FIG. 19 is a six-surface view of the conductive member 510 of FIGS. 17 and 18;
FIG. 20 is a perspective view of a conductive member 610 of FIGS. 1 and 2;
FIG. 21 is a perspective view of the conductive member 610 of FIGS. 1 and 2 as viewed from another angle;
FIG. 22 is a six-surface view of the conductive member 610 of FIGS. 20 and 21;
FIG. 23 is a perspective view of a shielding plate 710 of FIGS. 1 and 2;
FIG. 24 is a perspective view of the shielding plate 710 of FIGS. 1 and 2 as viewed from another angle;
FIG. 25 is a six-surface view of the shielding plate 710 of FIGS. 23 and 24;
FIG. 26 is a perspective view of an alignment plate 810 of FIGS. 1 and 2;
FIG. 27 is a perspective view of the alignment plate 810 of FIGS. 1 and 2 as viewed from another angle;
FIG. 28 is a six-surface view of the alignment plate 810 of FIGS. 26 and 27;
FIG. 29 is a perspective view of the alignment plate 920 of FIGS. 1 and 2;
FIG. 30 is a perspective view of the alignment plate 920 of FIGS. 1 and 2 as viewed from another angle;
FIG. 31 is a six-surface view of the alignment plate 920 of FIGS. 29 and 30;
FIG. 32 is a view showing the positional relationship of the upper housing 500, the conductive member 510, the shielding plate 710, and the alignment plate 810 in the high-speed transmission connector 6 of FIGS. 1 and 2;
FIG. 33 is a view showing the positional relationship of the upper housing 500, the conductive member 510, the shielding plate 710, and the alignment plate 810 in the high-speed transmission connector 6 of FIGS. 1 and 2 as viewed from another angle;
FIG. 34 is a view showing the positional relationship of the lower housing 600, the conductive member 620, and the shielding plate 720 in the high-speed transmission connector 6 of FIGS. 1 and 2;
FIG. 35 is a view showing the positional relationship of the lower housing 600, the conductive member 620, and the shielding plate 720 in the high-speed transmission connector 6 of FIGS. 1 and 2 as viewed from another angle;
FIG. 36 is a view showing the positional relationship of the inner housing 400, the conductive member 520, the conductive member 610, and the alignment plate 920 in the high-speed transmission connector 6 of FIGS. 1 and 2; and
FIG. 37 is a view showing the positional relationship of the lower housing 600, the conductive member 620, and the shielding plate 720 in the high-speed transmission connector 6 of FIGS. 1 and 2.

### Detailed Description of Embodiments

Hereinafter, a high-speed transmission connector 6 according to an embodiment of the present invention will be described with reference to the drawings. The high-speed transmission connector 6 is used by mounting it on a circuit board. A header 7 of an optical transceiver 5, which is a communicating counterpart device, is fitted in a slot 40 of the high-speed transmission connector 6. In the following description, a direction in which the high-speed transmission connector 6 is mounted on the circuit board is referred to as a Z direction, a direction in which the optical transceiver 5 is fitted to the high-speed transmission connector 6 is referred to as an X direction, and the direction orthogonal to both the Z direction and the X direction is referred to as a Y direction. Further, a +Z side, which is a side of the high-speed transmission connector 6 in the Z direction, is appropriately referred to as an upper side, and a -Z side, which is a circuit board side, is appropriately referred to as a lower side. Further, a +X side, which is a side of the optical transceiver 5 in the X direction, is appropriately referred to as a front side, and a -X side, which is a side of the high-speed transmission connector 6, is appropriately referred to as a rear side. Further, a +Y side is appropriately referred to as a left side, and a -Y side is appropriately referred to as a right side.

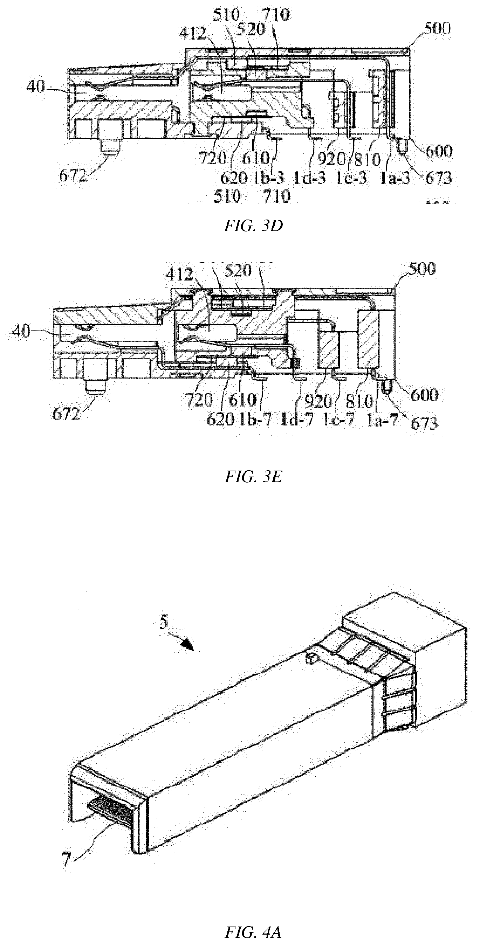

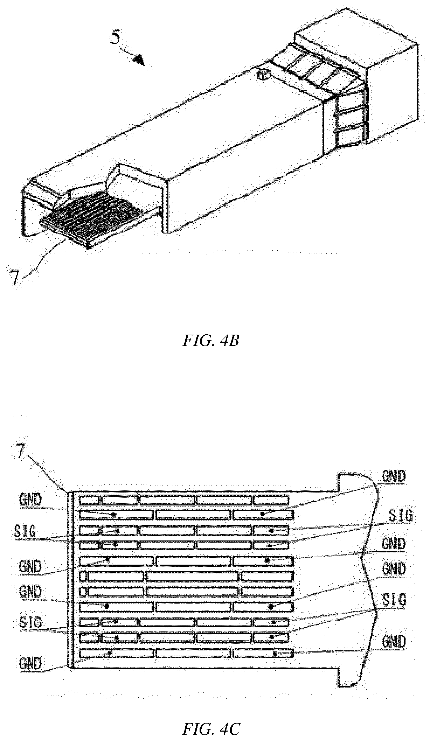

As shown in FIGS. 4A and 4B, the optical transceiver 5 has a stick shape. The header 7 projects from a front end of the optical transceiver 5. An upper side and left and right sides of the header 7 are covered with a housing. As shown in FIG. 4C, first to 11th pad rows are formed on an upper surface of the header 7. For each of the first pad row on the left end, the 4th pad row on the 4th from the left end, the 7th pad row on the 7th from the left end, and the 10th pad row on the 10th from the left end among the first to eleventh pad rows, provided are two ground pads GNDs spaced on the front and rear sides with one pad sandwiched therebetween. For each of the 3rd pad row on the 3rd from the left end, the 4th pad row on the 4th from the left end, the 9th pad row on the 9th from the left end, and the 10th pad row on the 10th from the left end, provided are two signal pads SIGs spaced on the front side and the rear side with two pads sandwiched therebetween.

First to 11th pad rows are also formed on a lower surface of the header 7. For each of the first pad row on the left end, the 4th pad row on the 4th from the left end, the 7th pad row on the 7th from the left end, and the 10th pad row on the 10th from the left end among the first to 11th pad rows, provided are two ground pads GNDs spaced on the front and rear sides with one pad sandwiched therebetween. For each of the 3rd pad row on the 3rd from the left end, the 4th pad row on the 4th from the left end, the 9th pad row on the 9th from the left end, and the 10th pad row on the 10th from the left end, provided are two signal pads SIGs spaced on the front side and the rear side with two pads sandwiched therebetween.

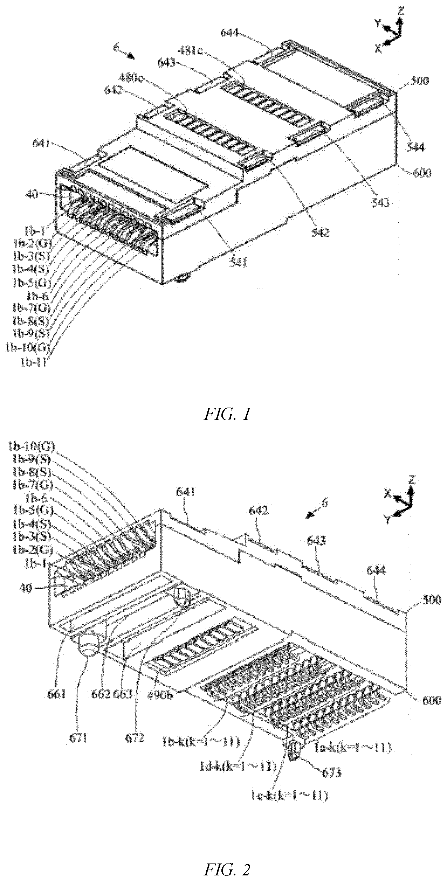

As shown in FIGS. 1, 2, and 3A to 3D, the high-speed transmission connector 6 includes an upper housing 500, a lower housing 600, an inner housing 400, a contact 1a-k (k = 1 to 11) which is a first contact, a contact 1b-k (k = 1 to 11) which is a second contact, a contact 1c-k (k = 1 to 11) which is a third contact, a contact 1d-k (k = 1 to 11) which is a fourth contact, a conductive member 510 which is a first conductive member, a conductive member 520 which is a second conductive member, a conductive member 610 which is a third conductive member, a conductive member 620 which is a fourth conductive member, a shielding plate 710 which is a first shielding plate, a shielding plate 720 which is a second shielding plate, an alignment plate 810 which is a first alignment plate, and an alignment plate 920 which is a second alignment plate.

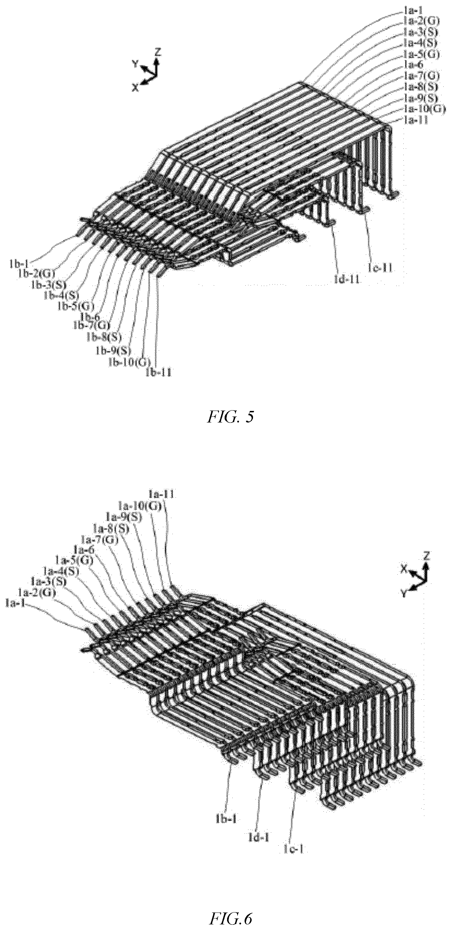

The configuration of each of these components will be described below in detail. As shown in FIGS. 5, 6 and 7, contacts 1a-k (k = 1 to 11), 1b-k (k = 1 to 11), 1c-k (k = 1 to 11), and 1d-k (k = 1 to 11) are obtained by bending rod-shaped metal pieces at a plurality of positions. The contacts 1a-k (k = 1 to 11), 1b-k (k = 1 to 11), 1c-k (k = 1 to 11), and 1d-k (k = 1 to 11) are arranged laterally.

The contacts 1a-k (k = 1 to 11), 1b-k (k = 1 to 11), 1c-k (k = 1 to 11), and 1d-k (k = 1 to 11) each extend longitudinally. The longitudinal dimensions of the contacts 1a-k, 1b-k, 1c-k, and 1d-k decrease in the order of the contact 1a-k > contact 1b-k > contact 1c-k > contact 1d-k.

The contact 1a-k includes a tip side contact portion 11a bent in a L shape, a straight portion 12a extending diagonally upward and rearward from a rear end of the tip side contact portion 11a, a straight portion 13a extending rearward from a rear end of the straight portion 12a, a straight portion 14a extending diagonally upward and rearward from a rear end of the straight portion 13a, a straight portion 15a extending rearward from a rear end of the straight portion 14a, a straight portion16a extending downward from a rear end of the straight portion 15a, and a substrate side contact portion 17a extending rearward from a lower end of the straight portion 16a.

The contact 1b-k includes a tip side contact portion 11b bent in a L shape, a straight portion 12b extending diagonally downward and rearward from a rear end of the tip side contact portion 11b, a straight portion 13b extending rearward from a rear end of the straight portion 12b, a straight portion 14b extending downward from a rear end of the straight portion 13b, a straight portion 15b extending rearward from a rear end of the straight portion 14b, a straight portion 16b extending downward from a rear end of the straight portion 15b, and a substrate side contact portion 17b extending rearward from a lower end of the straight portion 16b.

The contact 1c-k includes a tip side contact portion 11c bent in a L shape, a straight portion 12c extending diagonally upward and rearward from a rear end of the tip side contact portion 11c, a straight portion 15c extending rearward from a rear end of the straight portion 12c, a straight portion 16c extending downward from a rear end of the straight portion 15c, and a substrate side contact portion 17c extending rearward from a lower end of the straight portion 16c.

The contact 1d-k includes a tip side contact portion 11d bent in a L shape, a straight portion 12d extending diagonally downward and rearward from a rear end of the tip side contact portion 11d, a straight portion 15d extending rearward from a rear end of the straight portion 12d, a straight portion 16d extending downward from a rear end of the straight portion 15d, and a substrate side contact portion 17d extending rearward from a lower end of the straight portion 16d.

Here, among contacts 1a-k (k = 1 to 11), 1b-k (k = 1 to 11), 1c-k (k = 1 to 11), and 1d-k (k = 1 to 11), the leftmost contacts 1a-1, 1b-1, 1c-1, and 1d-1, the 5th contacts 1a-5, 1b-5, 1c-5, and 1d-5 from left, the 7th contacts 1a-7, 1b-7, 1c-7, and 1d-7 from left, the 10th contacts 1a-10, 1b-10, 1c-10, and 1d-10 from left are to be in contact with the ground pads GNDs of the header 7.

Also, the third contacts 1a-3, 1b-3, 1c-3, and 1d-3 from left, the 4th contacts 1a-4, 1b-4, 1c-4, and 1d-4 from left, the 8th contacts 1a-8, 1b-8, 1c-8, and 1d-8 from left, and the 9th contacts 1a-9, 1b-9, 1c-9, and 1d-9 from left are to be contact with the signal pads SIGs of the header 7.

Hereinafter, appropriately, the contacts 1a-k, 1b-k, 1c-k, and 1d-k to be in contact with the ground pads GNDs are labeled with letter (G), and the contacts 1a-k, 1b-k, 1c-k, and 1d-k to be in contact with the signal pads SIGs are labeled with letter (S), to distinguish them.

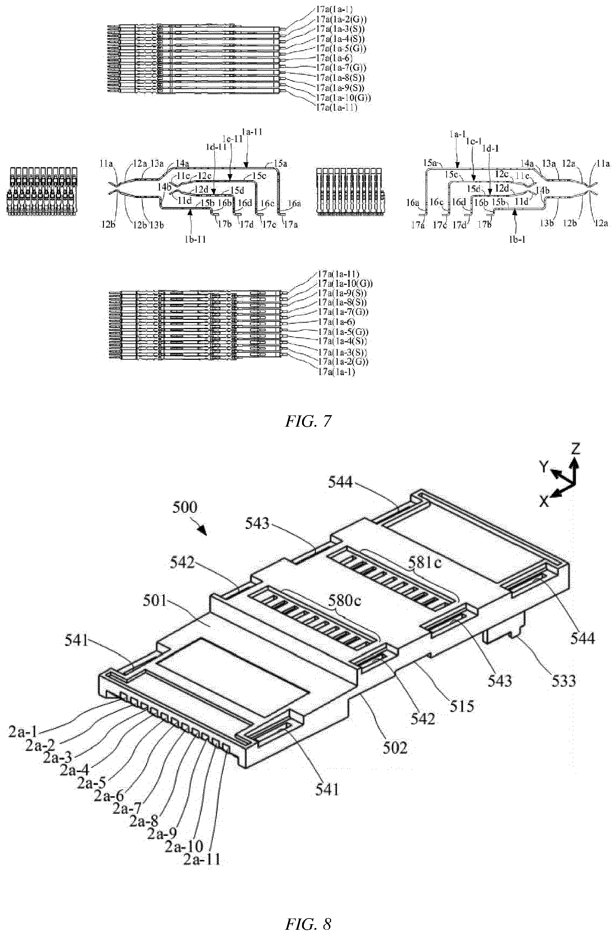

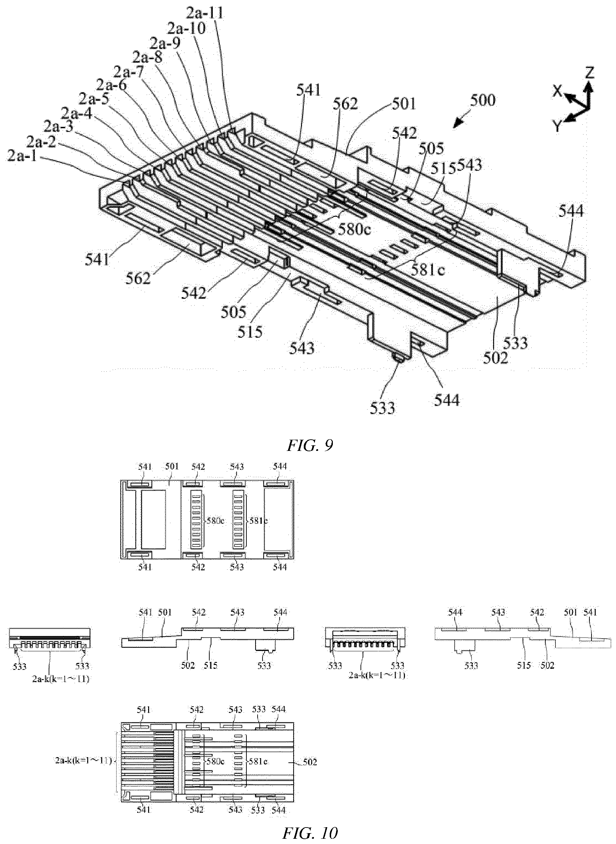

As shown in FIGS. 8, 9, and 10, the upper housing 500 has a thin plate shape. A part of the upper surface of the upper housing 500 on the front side is gouged downward to form a stepped portion 501. A part of the lower surface of the upper housing 500 on the rear side is gouged upward to form a stepped portion 502. A rectangular hole 541 is formed slightly inside the left and right ends of the stepped portion 501 of the upper housing 500. The rectangular hole 541 penetrates the upper housing 500 vertically.

A cavity 562 is provided on the rear side of the rectangular hole 541 on the back surface of the upper housing 500. A row of grooves 2a-k (k = 1 to 11) which are first grooves separated by a partition wall are formed between the rectangular hole 541 and the cavity 562 on the left side and the rectangular hole 541 and the cavity 562 on the right side on the back surface of the upper housing 500. The grooves 2a-k (k = 1 to 11) are arranged laterally. Each of the grooves 2a-k (k = 1 to 11) extends longitudinally.

Rectangular holes 542, rectangular holes 543, and rectangular holes 544 are formed slightly inside the left and right ends of the stepped portion 502 of the upper housing 500. The rectangular hole 542, the rectangular hole 543, and the rectangular hole 544 are spaced from each other in the longitudinal direction. The rectangular hole 542, the rectangular hole 543, and the rectangular hole 544 penetrate the upper housing 500 vertically.

Recesses 515 that are upwardly recessed are formed on the rear side of the rectangular holes 542 on the left and right sides in the stepped portion 502. Recesses 505 that are further upwardly recessed are formed on the front side of the recesses 515. 10 rectangular holes 580c arranged laterally are formed between the left and right rectangular holes 542 in the stepped portion 502. 10 rectangular holes 581c arranged laterally are formed between the left and right rectangular holes 543. The rectangular holes 580c and the rectangular holes 581c penetrate the upper housing 500 vertically. A support plate 533 is provided on the inner side of the rectangular holes 544 on the left and right sides in the stepped portion 502. The support plate 533 projects downward.

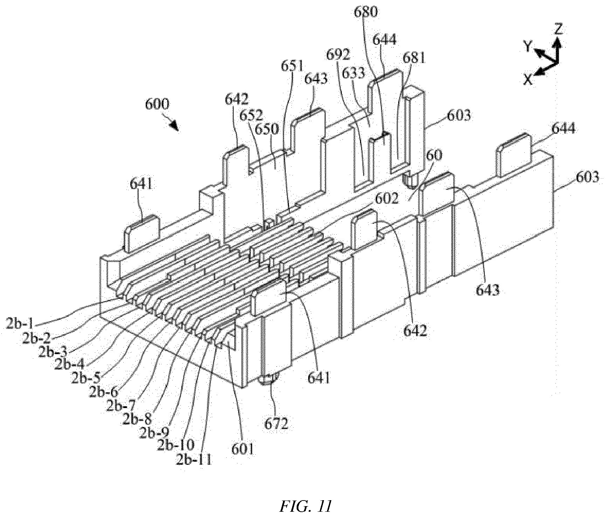

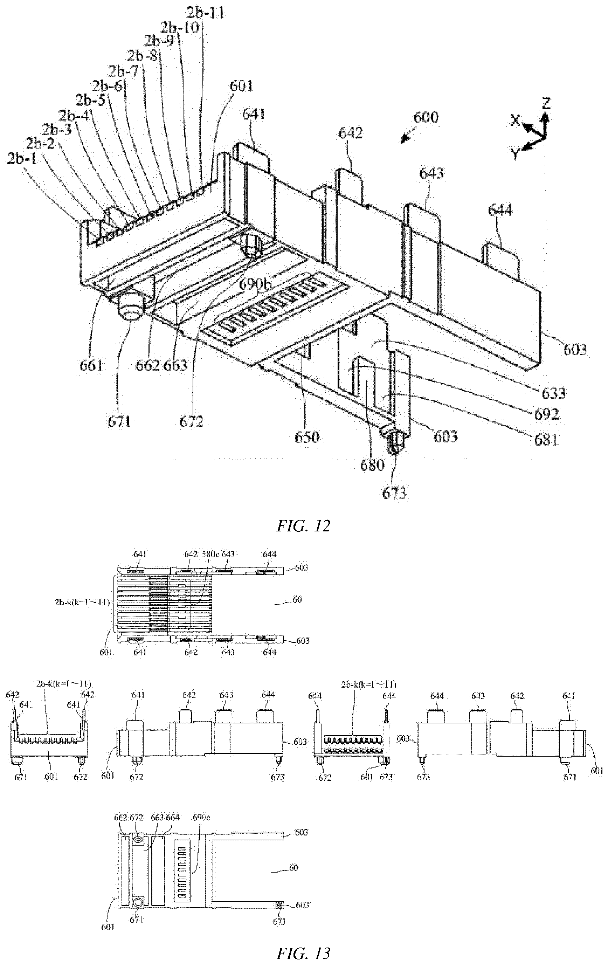

As shown in FIGS. 11, 12, and 13, the lower housing 600 includes a pair of side plate portions 603on the left and right sides and a bottom plate portion 601. The side plate portions 603 have substantially the same anteroposterior width as that of the upper housing 500. The bottom plate portion 601 has an anteroposterior width approximately half the width of the upper housing 500. Parts of the side plate portions 603 on the front side thereof are formed integrally with the bottom plate portion 601. A part of the bottom plate portion 601 on the rear side is gouged downward to form a stepped portion 602.

On the rear side of the bottom plate portion 601 there is formed a gap 60 between one lower end portion of the side plate portion 603 and the other lower end portion of the side plate portion 603. A support plate 641, a support plate 642, a support plate 643, and a support plate 644 are provided on the upper surface of the side plate portion 603. The support plate 641, the support plate 642, the support plate 643, and the support plate 644 project upward.

On the lower side of the support plate 642 and of the support plate 643, on the inner surface of the side plate portion 603, a recess 650 is formed so as to be slightly recessed outward from an inner surface of the side plate portion 603. The concave surface of the recess 650 is flush with inner surfaces of the support plate 642 and the support plate 643. A recess 651 that is recessed downward is provided at the bottom of the recess 650. A recess 652 that is recessed further downward is provided at the bottom of the recess 651.

On the lower side of the support plate 644 on the inner surface of the side plate portion 603 a recess 633 is formed so as to be slightly recessed outward from the inner surface of the side plate portion 603. A part of the recess 633 on the lower side is divided into a dent 681 and a dent 692 by a partition 680 extending upward from the center of the bottom surface of the recess 633 in the longitudinal direction.

A row of grooves 2b-k (k = 1 to 11), which are second grooves separated by a partition wall, are formed on the upper surface of the bottom plate portion 601. The grooves 2b-k (k = 1 to 11) are arranged laterally. The grooves 2b-k (k = 1 to 11) extend longitudinally. 10 rectangular holes 690b arranged laterally are formed at a bottom of a cut of the partition wall separating the grooves 2b-k (k = 1 to 11) in the stepped portion 602. The rectangular holes 690b penetrate the stepped portion 602 vertically.

Cavities 661, 662, and 663 are provided on the lower surface of the bottom plate portion 601. Positioning bosses 671 and 672 are provided on both the left and right sides of the cavity 662 on the lower surface of the bottom plate portion 601. A positioning boss 673 is also provided at the rear end of the lower surface of the plate portion 603 on the left side.

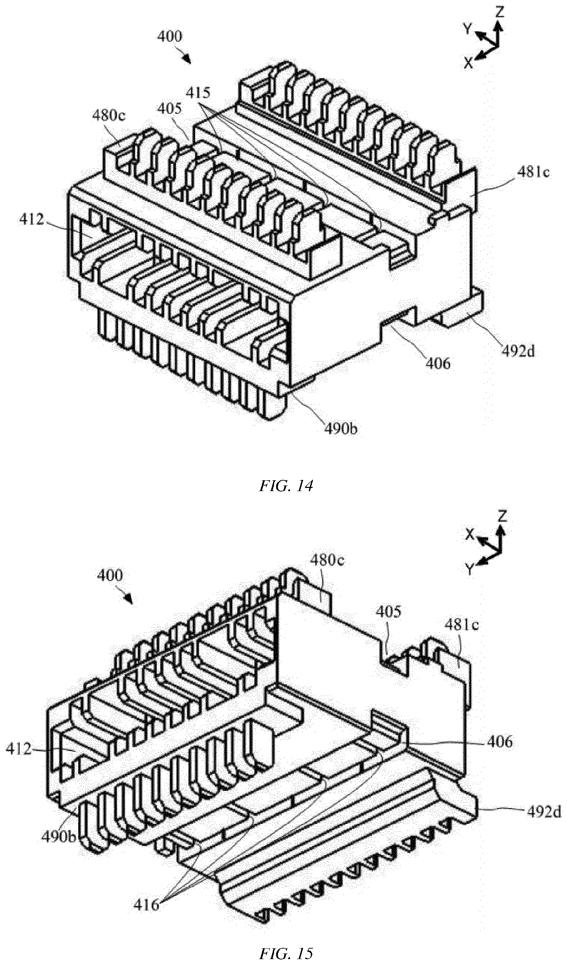

As shown in FIGS. 14, 15, and 16, the inner housing 400 has a substantially rectangular parallelepiped shape. A rectangular opening 412 is formed on the front surface of the inner housing 400. A row of through holes 4c-k (k = 1 to 11) which are first holes, and a row of through holes 4d-k (k = 1 to 11) which are second holes are provided at the deep part of the opening 412. The through holes 4c-k (k = 1 to 11) and 4b-k (k = 1 to 11) are respectively divided into upper and lower parts and arranged laterally. Each of the through holes 4c-k (k = 1 to 11) and the through holes 4d-k (k = 1 to 11) penetrates between a surface of the opening 412 at the deep part thereof and the rear surface on the back side thereof and extends longitudinally.

Grooves separated by a partition wall are formed on each of the upper and lower surfaces of the opening 412. The upper and lower grooves are arranged laterally. The upper and lower grooves each extend longitudinally and are connected to the through holes 4c-k and 4d-k, respectively.

Front and rear central portions of the upper surface and the lower surface of the inner housing 400 are recessed inward as recesses 405 and 406. Slits 415 are formed in the recess 405. The slits 415 communicate with the through holes 4c-2, 4c-5, 4c-7, and 4c-10. Slits 416 are formed in the recess 406. The slits 416 communicate with the through holes 4b-2, 4b-5, 4b-7, and 4b-10.

A protrusion 480c and a protrusion 481c protruding upward are respectively provided on the front side and the rear side of the recess 405 on the upper surface of the inner housing 400. The rear end of the protrusion 481c projects further rearward than the rear surface of the inner housing 400. Grooves separated by a partition wall are formed on the upper surface of the protrusion 480c and the upper surface of the protrusion 481c.

A protrusion 490b and a protrusion 492d protruding downward are respectively provided on the front and rear sides of the recess 406 on the lower surface of the inner housing 400. The rear end of the protrusion 492d projects further rearward than the rear surface of the inner housing 400. Grooves separated by a partition wall are formed on the lower surface of the protrusion 490b. A groove recessed in a comb blade shape is formed on the rear surface of the protrusion 492d. The grooves of the protrusion 492d are arranged laterally. The grooves of the protrusion 492d each extend vertically.

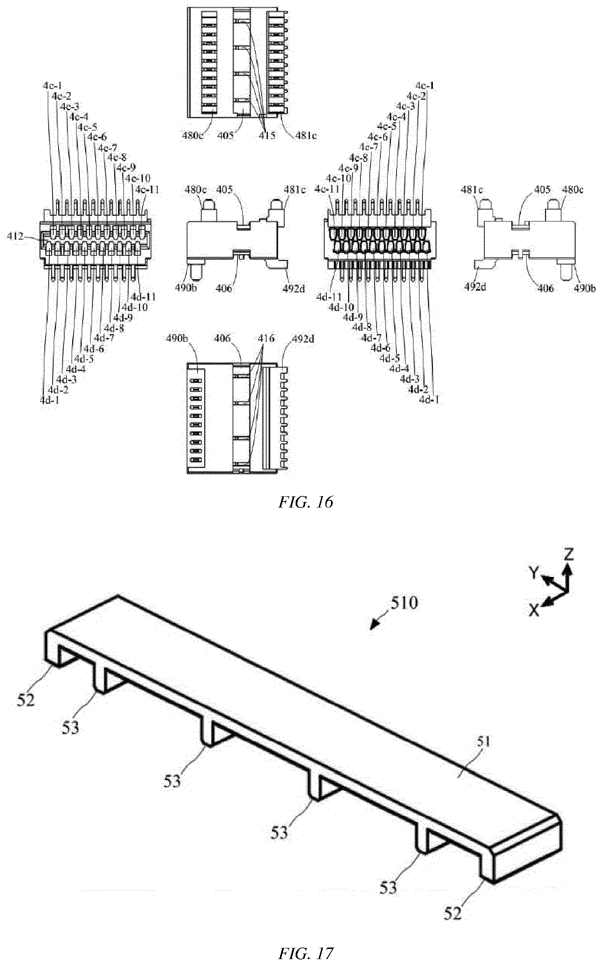

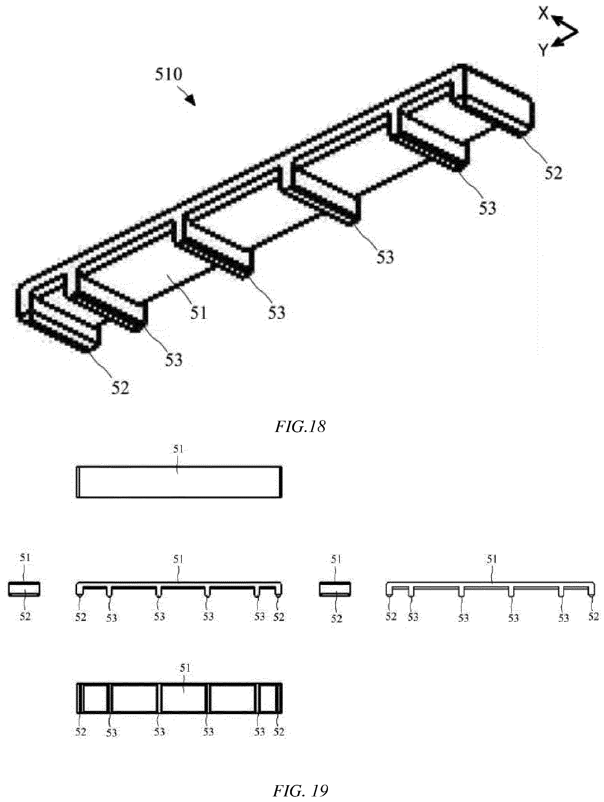

As shown in FIGS. 17, 18, and 19, the conductive member 510 includes a horizontal plate portion 51 extending laterally in a straight manner, end portions 52 formed by bending the left and right ends of the horizontal plate portion 51 into an L shape, and projected portions 53 that rise up from four positions on the surface of the horizontal plate portion 51 on the side of which the end portions 51 are bent. The conductive member 520 has the same configuration as the conductive member 510.

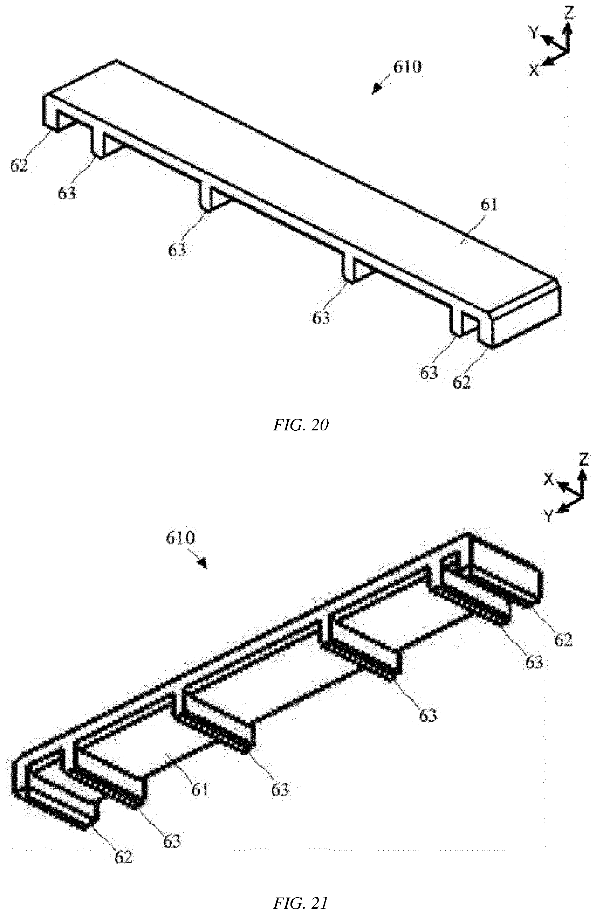

As shown in FIGS. 20, 21, and 22, the conductive member 610 includes a horizontal plate portion 61 extending laterally in a straight manner, end portions 62 formed by bending the left and right ends of the horizontal plate portion 61 into an L shape, and projected portions 63 that rise up from four positions on the surface of the horizontal plate portion 61 on the side of which the end portions 62are bent. The conductive member 620 has the same configuration as the conductive member 610.

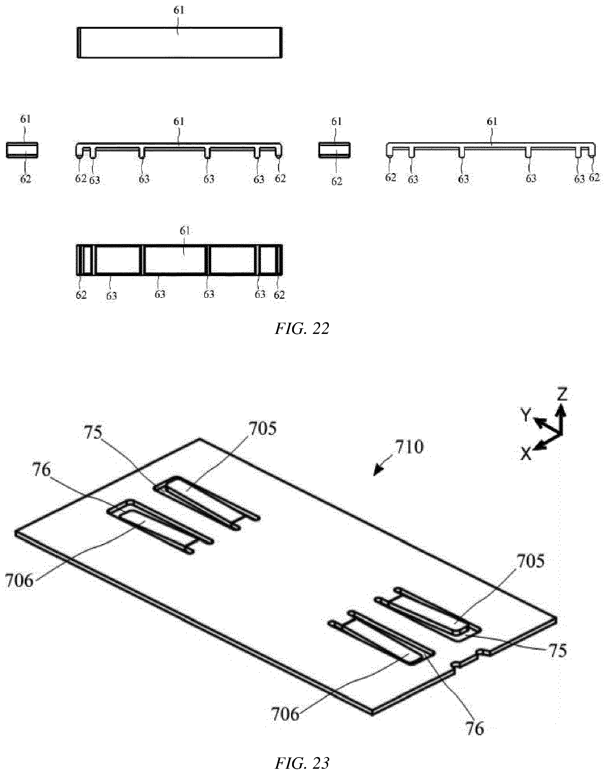

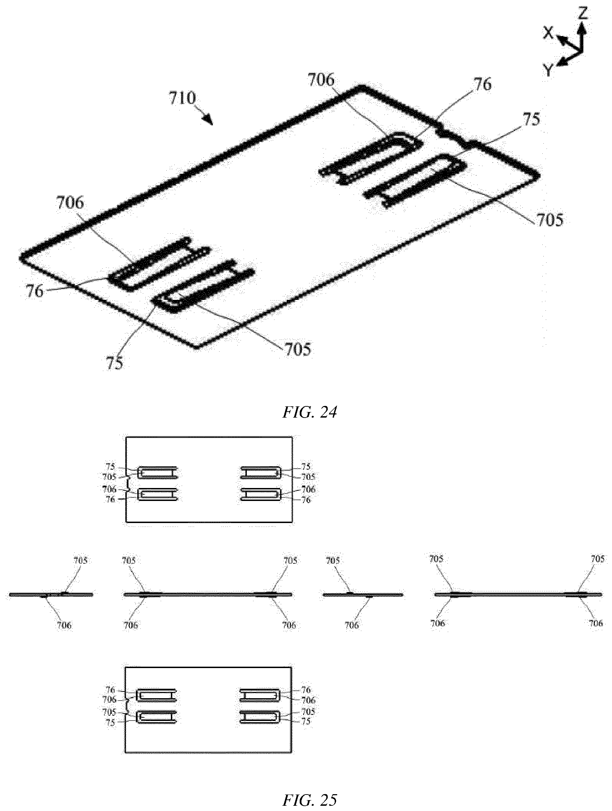

As shown in FIGS. 23, 24, and 25, the shielding plate 710 has a thin rectangular plate shape. The shielding plate 710 is formed with a notch 75 and a tilting plate portion 705 surrounded by the notch 75, as well as a notch 76 and a tilting plate portion 706 surrounded by the notch 76. The notch 75 and the tilting plate portion 705 as well as the notch 76 and the tilting plate portion 706 are positioned mirror-symmetrically with respect to a center line passing through a center of the shielding plate 710 in the lateral direction.

The tilting plate portion 705 extends diagonally upward in a slightly inclined manner from a base on a side of a center of the shielding plate 710 in the lateral direction. A tip of the tilting plate portion 705 protrudes above the shielding plate 710. The tilting plate portion 706 extends diagonally downward in a slightly inclined manner from the base on a side of a center of the shielding plate 710 in the lateral direction. A tip of the tilting plate portion 706 protrudes below the shielding plate 710. The shielding plate 720 has the same configuration as the shielding plate 710.

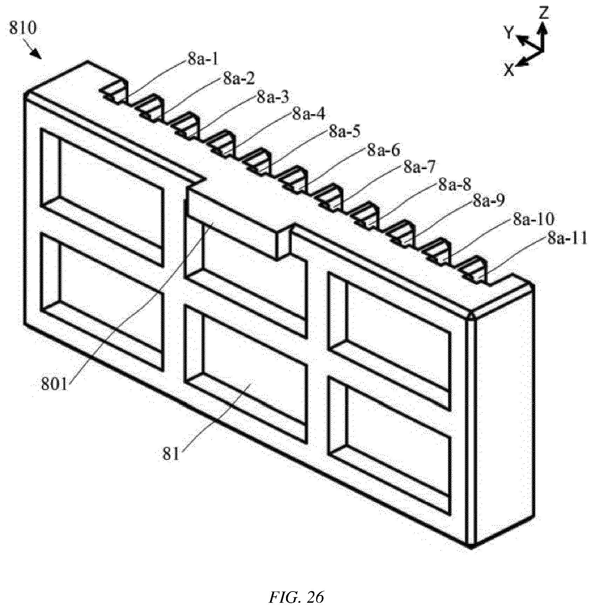

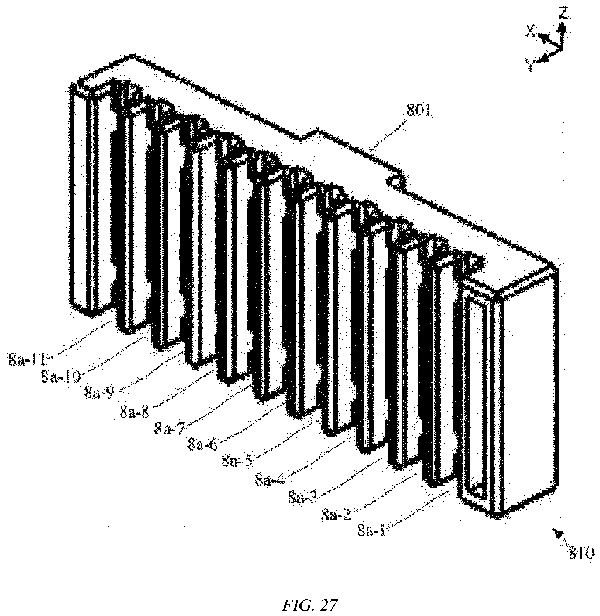

As shown in FIGS. 26, 27, and 28, the alignment plate 810 has a substantially rectangular parallelepiped shape. A protrusion 801 is provided at an upper end of a front surface of the alignment plate 810, and six cavities 81 are provided below the protrusion 801. Grooves 8a-k (k = 1 to 11) recessed in a comb blade shape are provided on the rear surface of the alignment plate 810. The grooves 8a-k (k = 1 to 11) are arranged laterally. Each of the grooves 8a-k (k = 1 to 11) extends vertically.

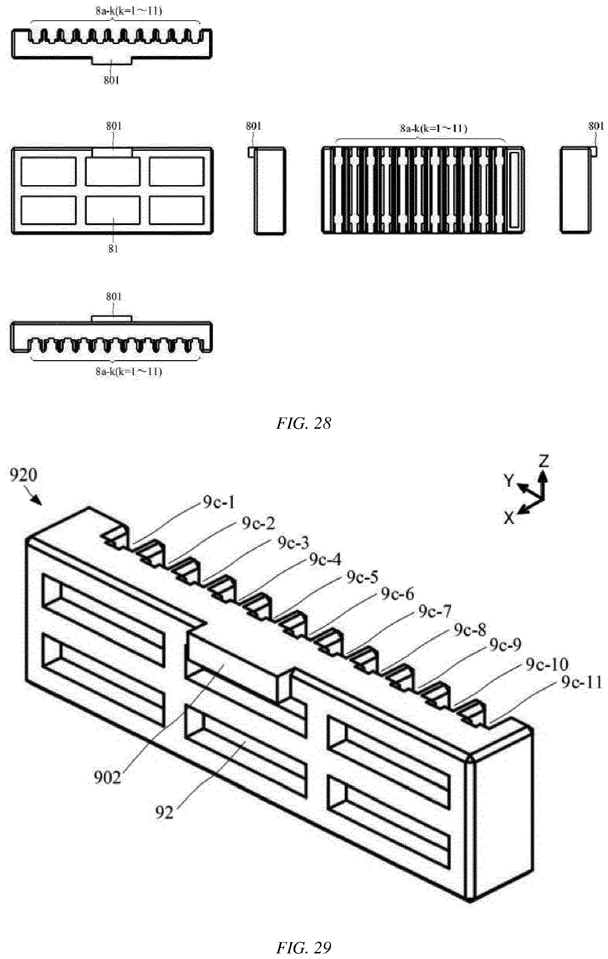

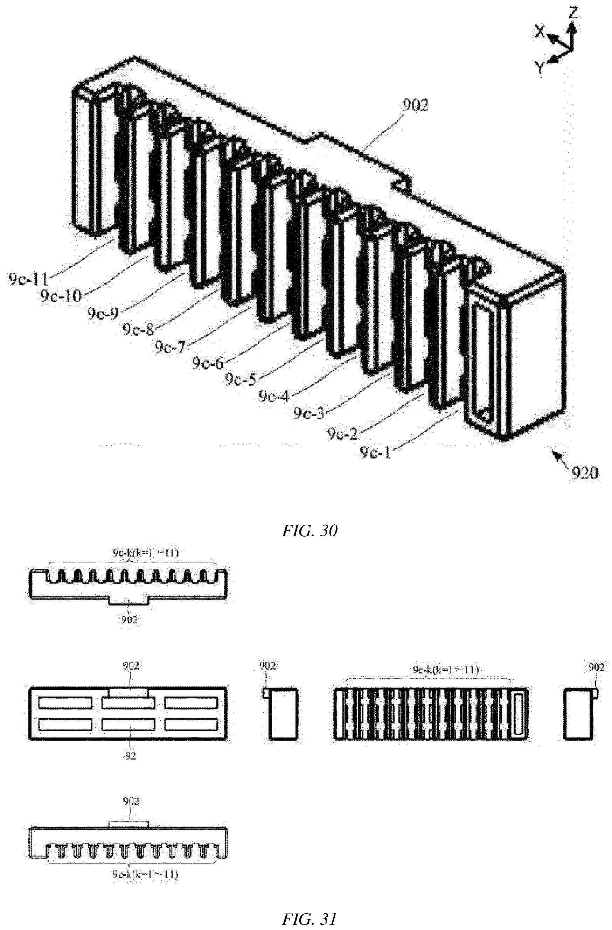

As shown in FIGS. 29, 30, and 31, the alignment plate 920 has a substantially rectangular parallelepiped shape. The vertical dimension of the alignment plate 920 is smaller than the vertical dimension of the alignment plate 810. A protrusion 902 is provided at an upper end of a front surface of the alignment plate 920, and six cavities 92 are provided below the protrusion 902. Grooves 9c-k (k = 1 to 11) recessed in a comb blade shape are provided on the rear surface of the alignment plate 920. The grooves 9c-k (k = 1 to 11) are arranged laterally. Each of the grooves 9c-k (k = 1 to 11) extends vertically.

The details of the configurations of the components are described above. Among these components, the row of contacts 1a-k (k = 1 to 11) are supported by the upper housing 500, the row of contacts 1b-k (k = 1 to 11) are supported by the lower housing 600, and the row of contacts 1c-k (k = 1 to 11) and the row of contacts 1d-k (k = 1 to 11) are supported by the inner housing 400. The upper housing 500, the lower housing 600, and the inner housing 400 are assembled in such a manner that the upper housing 500 and the lower housing 600 face each other in a vertical direction with a gap therebetween, and that the inner housing 400 is accommodated in these two housing (the upper housing 500 and the lower housing 600).

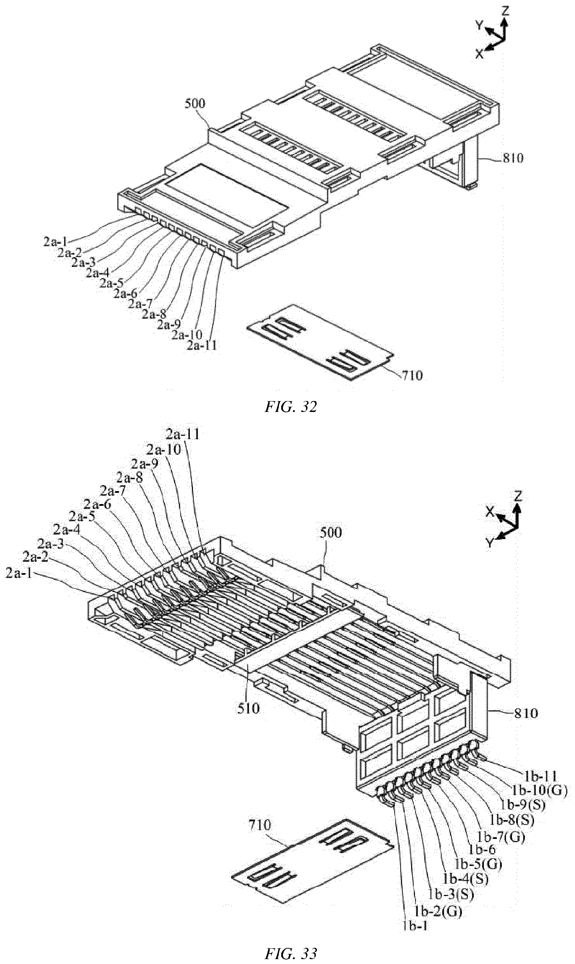

More specifically, as shown in FIGS. 32 and 33, the straight portions 13a of the contacts 1a-k (k = 1 to 11) are press-fitted into the grooves 2a-k (k = 1 to 11) of the upper housing 500. The tip side contact portions 11a of the contacts 1a-k (k = 1 to 11) protrude below the grooves 2a-k (k = 1 to 11). The conductive member 510 is arranged below the contacts 1a-k (k = 1 to 11). The left and right ends of the conductive member 510 are respectively fitted into the left and right recesses 505 of the upper housing 500 and supported by the left and right recesses 505. The tip of the protrusion 53 of the conductive member 510 comes into contact with the straight portions 15a of the contacts 1a-2 (G), 1a-5 (G), 1a-7 (G), and 1a-10 (G) from below.

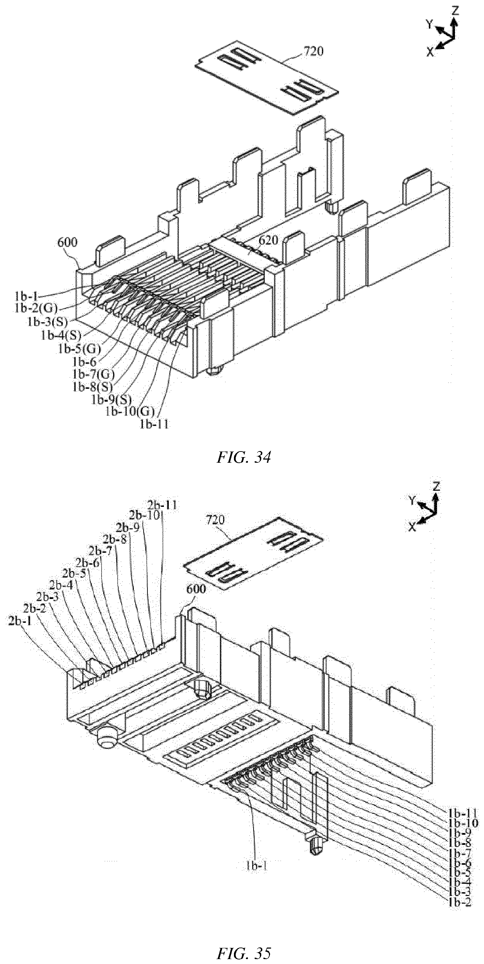

As shown in FIGS. 34 and 35, the straight portions 13b and 15b of the contacts 1b-k (k = 1 to 11) are press-fitted into the grooves 2b-k (k = 1 to 11) of the lower housing 600. The tip side contact portions 11b of the contacts 1b-k (k = 1 to 11) protrude above the groove 2b-k (k = 1 to 11). The conductive member 620 is arranged above the contacts 1b-k (k = 1 to 11). The left and right ends of the conductive member 620 are respectively fitted into the left and right recesses 652 of the lower housing 600 and supported by the left and right recesses 652. The tip of the protrusion 63 of the conductive member 620 comes into contact with the straight portions 15b of the contacts 1b-2 (G), 1b-5 (G), 1b-7 (G), and 1b-10 (G) from above.

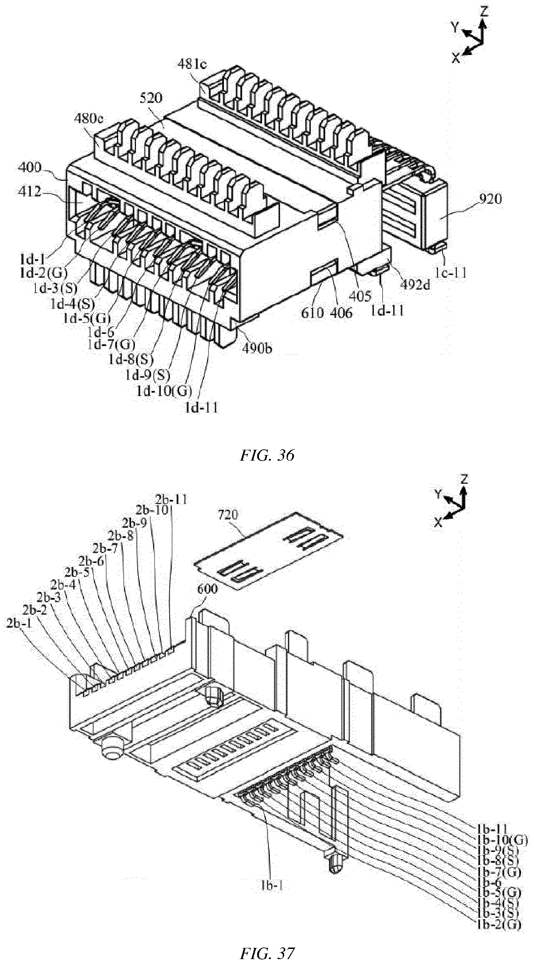

As shown in FIG. 36, the straight portions 15c of the contacts 1c-k (k = 1 to 11) are inserted into the through holes 4c-k (k = 1 to 11) on the upper side of the inner housing 400. The tip side contact portions 11c of the contacts 1c-k (k = 1 to 11) protrude below the upper groove in the opening 412. The straight portions 15d of the contacts 1d-k (k = 1 to 11) are inserted into the through holes 4d-k (k = 1 to 11) on the lower side of the inner housing 400. The tip side contact portions 11d of the contacts 1d-k (k = 1 to 11) protrudes above the lower groove in the opening 412.

The conductive member 520 is fitted in the recess 405 of the inner housing 400. The projected portions 53 of the conductive member 520 pass through the slits 415 and reach the through holes 4c-2, 4c-5, 4c-7, and 4c-10, and the tips of the projected portions 53 come into contact with the straight portions 15c of the contacts 1c-2 (G), 1c-5 (G), 1c-7 (G), and 1c-10 (G) in the through holes 4c-2, 4c-5, 4c-7, and 4c-10 from above.

The conductive member 610 is fitted in the recess 406 of the inner housing 400. The projected portions 63 of the conductive member 610 pass through the slits 416 and reach the through holes 4d-2, 4d-5, 4d-7, 4d-10, and the tips of the projected portions 63 come into contact with the straight portions 15d of the contacts 1d-2 (G), 1d-5 (G), 1d-7 (G), and 1d-10 (G) in the through holes 4d-2, 4d-5, 4d-7, and 4d-10 from below.

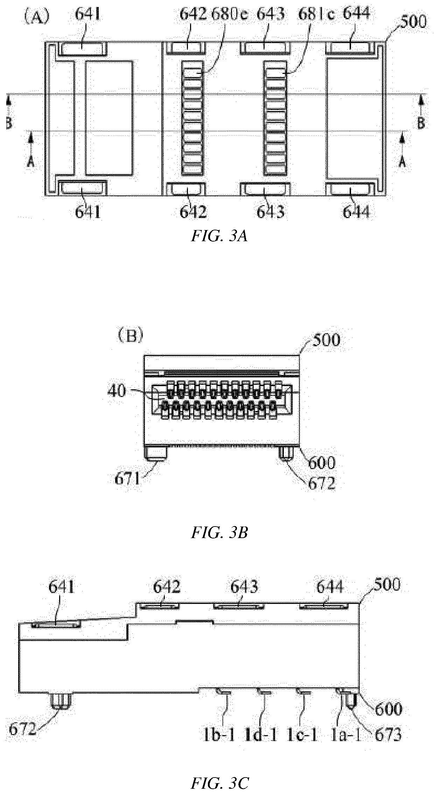

As shown in FIGS. 3D and 3E, the shielding plate 710 is arranged between the conductive member 510 and the conductive member 520. The shielding plate 710 is located in the middle between the straight portion 15a of the contact 1a-k (k = 1 to 11) and the straight portion 15c of the contact 1c-k (k = 1 to 11), and is sandwiched between the conductive member 510 and the conductive member 520. The tip of the tilting plate portion 705 of the shielding plate 710 is in contact with the conductive member 510, and the tip of the tilting plate portion 706 of the shielding plate 710 is in contact with the conductive member 520. The left and right ends of the shielding plate 710 are fitted into the left and right recesses 515 of the upper housing 500 and supported by the left and right recesses 515.

The shielding plate 720 is arranged between the conductive member 610 and the conductive member 620. The shielding plate 720 is located in the middle between the straight portion 15b of the contact 1b-k (k = 1 to 11) and the straight portion 15d of the contact 1d-k (k = 1 to 11), and is sandwiched between the conductive member 610 and the conductive members 620. The tip of the tilting plate portion 705 of the shielding plate 720 is in contact with the conductive member 610, and the tip of the tilting plate portion 706 of the shielding plate 720 is in contact with the conductive member 620. The left and right ends of the shielding plate 720 are fitted into the left and right recesses 651 of the lower housing 600, and are supported by the left and right recesses 651.

The inner housing 400 is located between the stepped portion 502 of the upper housing 500 and the stepped portion 602 of the lower housing 600. The Alignment plates 810 and 920 are arranged between the left and right side plate portions 603 of the lower housing 600 on the rear side of the inner housing 400. The left and right ends of the alignment plate 810 are fitted into the left and right dents 681 of the lower housing 600 and supported by the left and right dents 681. The left and right ends of the alignment plate 920 are fitted into the left and right dents 692 of the lower housing 600 and are supported by the left and right dents 692.

The left and right ends of the inner housing 400 are fitted into the left and right recesses 650 of the lower housing 600 and supported by the left and right recesses 650. The lower end of the partition wall that separates the grooves of the convex portion 490b in the inner housing 400 is passed through the rectangular holes 690b of the lower housing 600 and heat-sealed into the rectangular holes 690b. The support plate 533 of the upper housing 500 is fitted into the recess 633 of the lower housing 600.

The support plate 533 of the upper housing 500 is fitted into the recess 633 of the lower housing 600 and is in contact with the upper end surface of the partition 680. The upper end of the support plate 642 of the lower housing 600 is passed through the rectangular holes 542 of the upper housing 500 and heat-sealed into the rectangular holes 542. The upper end of the support plate 643 of the lower housing 600 is passed through the rectangular holes 543 of the upper housing 500 and heat-sealed into the rectangular holes 543. The upper end of the support plate 644 of the lower housing 600 is passed through the rectangular holes 544 of the upper housing 500 and heat-sealed into the rectangular holes 544.

As shown in FIGS. 3D and 3E, the grooves 2a-k (k = 1 to 11) of the upper housing 500 and the grooves 2b-k (k = 1 to 11) of the lower housing 600 face each other in a vertical direction with a gap therebetween, and the gap between the grooves 2a-k (k = 1 to 11) and the grooves 2b-k (k = 1 to 11) and the opening 412 of the inner housing 400 on the rear side of the gap form the slot 40.

The tip side contact portions 11a of the contacts 1a-k (k = 1 to 11) and the tip side contact portions 11b of the contacts 1b-k (k = 1 to 11) face each other in a vertical direction on the front side in the slot 40. The tip side contact portions 11c of the contacts 1c-k (k = 1 to 11) and the tip side contact portions 11d of the contacts 1d-k (k = 1 to 11) face each other in a vertical direction at a further rearward position than the position where the tip side contact portions 11c of the contacts 1c-k (k = 1 to 11) and the tip side contact portions 11d of the contacts 1d-k (k = 1 to 11) face each other in the slot 40.

When the header 7 of the optical transceiver 5 is inserted into the slot 40 of the high-speed transmission connector 6, the ground pads GNDs on the upper surface of the header 7 come into contact with the tip side contact portion 11a of the contacts 1a-k (G) and the tip side contact portion 11c of the contacts 1c-k (G), and the signal pads SIGS come into contact with the tip side contact portions 11a of the contacts 1a-k (S) and the tip side contact portions 11d of the contacts 1d-k (S).

Further, the ground pads GND on the lower surface of the header 7 come into contact with the tip side contact portions 11b of the contacts 1b-k (G) and the tip side contact portion 11d of the contacts 1d-k (G), and the signal pads SIGs come into contact with the tip end side contact portions 11b of the contacts 1b-k (S) and tip end side contact portions 11d of the contacts 1d-k (S).

The rear parts of the straight portions 13a of the contacts 1a-k (k = 1 to 11) press-fitted into the grooves 2a-k (k = 1 to 11) of the upper housing 500 advances, along the stepped portion 502 of the upper housing 500, to a position above the alignment plate 810 on the rear side of the inner housing 400, hang down at this position, pass through the grooves 8a-k (k = 1 to 11) of the alignment plate 810, and reaches the lower side of the gap 60 between the pair of side plate portions 603 of the lower housing 600.

The rear parts of the straight portion 13b of the contacts 1b-k (k = 1 to 11) press-fitted into the grooves 2b-k (k = 1 to 11) of the lower housing 600 hang down at a slightly further rearward position than the rear end of the stepped portion 602, and reach the lower side of the gap 60 of the lower housing 600.

The rear parts of the straight portions 15c of the contacts 1c-k (k = 1 to 11) inserted into the through holes 4c-k (k = 1 to 11) of the inner housing 400 advance to a position above the alignment plate 920 on the rear side of the inner housing 400, hang down at this position, pass through the grooves 9c-k (k = 1 to 11) of the alignment plate 920, and reach the lower side of the gap 60 of the lower housing 600.

The rear parts of the straight portions 15d of the contacts 1d-k (k = 1 to 11) inserted into the through hole 4d-k (k = 1 to 11) of the inner housing 400 advance to a position above the grooves of the protrusion 492d, hang down at this position, pass through the grooves of the protrusion 492d, and reach the lower side of the gap 60 of the lower housing 600.

Below the gap 60 of the lower housing 600, the substrate side contact portions 17b of the contacts 1b-k (k = 1 to 11), the substrate side contact portions 17d of the contacts 1d-k (k = 1 to 11), and the substrate side contact portion 17c of the contacts 1c-k (k = 1 to 11), and the substrate side contact portion 17a of contacts 1a-k (k = 1 to 11) are spaced at the same interval in a longitudinal direction.

When the positioning bosses 671, 672, and 673 of the high-speed transmission connector 6 are inserted into positioning holes of an electronic substrate and the high-speed transmission connector 6 is mounted on the electronic substrate, substrate side contact portions 17b of the contacts 1b-k (k = 1 to 11), substrate side contact portions 17d of the contacts 1d-k (k = 1 to 11), substrate side contact portions 17c of the contacts 1c-k (k = 1 to 11), and the substrate side contact portions 17a of the contacts 1a-k (k = 1 to 11) come into contact with pads of the electronic substrate.

The details of the present embodiment are described above. The high-speed transmission connector 6 of the present embodiment includes the row of first contacts 1a-k, a row of second contacts 1b-k, the row of third contacts 1c-k, and the row of fourth contacts 1d-k, the upper housing 500 that supports the row of first contacts 1a-k, the lower housing 600 that supports the row of second contacts 1b-k, and the inner housing 400 that supports the row of third contacts 1c-k and the row of fourth contacts 1d-k. Further, the upper housing 500, the lower housing 600, and the inner housing 400 are assembled in such a manner that the upper housing 500 and the lower housing 600 face each other in a vertical direction with a gap therebetween, the inner housing 400 is accommodated in the two housings (i.e., upper housing 500 and the lower housing 600), and the gap forms a slot 400 into which the header 7 of the optical transceiver 5 as a communicating counterpart device is to be fitted. Therefore, according to the present embodiment, it is possible to provide a QSFP-DD high-speed transmission connector 6 which facilitates part assembling and has high dimensional stability and contact reliability.

Furthermore, in the high-speed transmission connector 6 of the present embodiment, the plurality of projected portions 53 of the conductive member 510 are in contact with the plurality of ground contacts 1a-k (G), and the plurality of ground contacts 1a -K (G) are electrically connected to each other via the conductive member 510. Also, the plurality of projected portions 53 of the conductive member 520 are in contact with the plurality of ground contacts 1b-k (G), and the plurality of ground contacts 1b-k (G) are electrically connected to each other via the conductive member 520. Also, the plurality of projected portions 63 of the conductive member 610 are in contact with the plurality of ground contacts 1c-k (G), and the plurality of ground contacts 1c-k (G) are electrically connected to each other via the conductive member 610. Also, the plurality of projected portions 63 of the conductive member 620 are in contact with the plurality of ground contacts 1d-k (G), and the plurality of ground contacts 1d-k (G) are electrically connected to each other via the conductive member 620. Therefore, according to the present embodiment, it is possible to provide the QSFP-DD high-speed transmission connector 6 in which ripple are less likely to occur in the frequency characteristics.

Further, in the high-speed transmission connector 6 of the present embodiment, the alignment plate 810 is arranged on the rear side of the inner housing 400 between the pair of side plate portions 603 of the lower housing 600, and the alignment plate 920 is arranged on the rear side of the inner housing 400 and on the front side of the alignment plate 810. Further, the rear parts of the straight portions of the contact 1a-k (k = 1 to 11) press-fitted into the grooves 2a-k (k = 1 to 11) of the upper housing 500 pass through the groove 8a-k (k = 1 to 11) of the alignment plate 810 and reach the lower side of the gap 60 of the lower housing 600. Also, the rear parts of the straight portions 15c of the contacts 1c-k (k = 1 to 11) inserted into the through holes 4c-k (k = 1 to 11) of the upper housing 500 pass through the grooves 9c-k (k = 1 to 11) of the alignment plate 920, and reaches the lower side of the gap 60 of the lower housing 600. Therefore, it is possible to provide the QSFP-DD high-speed transmission connector 6 in which the misalignment of the contacts is unlikely to occur.

Although the embodiment of the present invention has been described above, the following modifications may be added to this embodiment.
(1) In the above embodiment, the number of contacts constituting one row of contacts 1a-k (k = 1 to 11), 1b-k (k = 1 to 11), 1c-k (k = 1 to 11), or 1d-k (k = 1 to 11) may be 2 to 10, or 11 or more. The number of grooves constituting one row of grooves 2a-k (k = 1 to 11) or 2b-k (k = 1 to 11) may be 2 to 11, or more than 11.
(2) In the above embodiment, one or both of the alignment plate 810 and the alignment plate 920 may not be provided. Further, a third alignment plate different from the alignment plate 810 and the alignment plate 920 may be arranged and configured such that the rear parts of the straight portions of the contacts 1b-k (k = 1 to 11) press-fitted in the grooves 2a-k (k = 1 to 11) of the upper housing 500 advances to a position on the upper side of the third alignment plate, hang down at this position, pass through grooves of the third alignment plate, and reach the lower side of the gap 60 of the lower housing 600.
(3) In the above embodiment, the plurality of projected portions 53 of the conductive member 510, the plurality of projected portions 53 of the conductive member 520, the plurality of projected portions 63 of the conductive member 610, and the plurality of projected portions 63 of the conductive member 620 do not need to be in contact with the plurality of ground contacts 1a-k (G), 1b-k (G), 1c-k (G) and 1d-k (G), may only be arranged close to the plurality of ground contacts 1a-k (G), 1b-k (G), 1c-k (G) and 1d-k (G). In brief, it is sufficient that the plurality of projected portions 53 of the conductive member 510, the plurality of projected portions 53 of the conductive member 520, the plurality of projected portions 63 of the conductive member 610, and the plurality of projected portions 63 of the conductive member 620 be electrically connected to the plurality of ground contacts 1a-k (G), 1b-k (G), 1c-k (G), and 1d-k (G).

### List of reference numerals

1a-k contact
1b-k Contact
1c-k Contact
1d-k Contact
2a-k Groove
2b-k Groove
4c-k Through hole
4d-k Through hole
5 Optical transceiver
6 High-speed transmission connector
7 Header
8a-k Groove
9c-k Groove
11a Tip side contact portion
11b Tip side contact portion
11c Tip side contact portion
11d Tip side contact portion
12a Straight portion
12b Straight portion
12c Straight portion
12d Straight portion
13a Straight portion
13b Straight portion
14a Straight portion
14b Straight portion
15a Straight portion
15b Straight portion
15c Straight portion
15d Straight portion
16a Straight portion
16b Straight portion
16c Straight portion
16d Straight portion
17a Substrate side contact portion
17b Substrate side contact portion
17c Substrate side contact portion
17d Substrate side contact portion
40 Slot
51 Horizontal plate portion
52 End portion
53 Projected portion
60 Gap
61 Horizontal plate portion
62 End portion
63 Projected portion
75 Notch
76 Notch
81 Cavity
92 Cavity
400 Inner housing
405 Recess
406 Recess
412 Opening
415 Slit
416 Slit
480c Protrusion
481c Protrusion
490b Protrusion
492d Protrusion
500 Upper housing
501 Stepped portion
502 Stepped portion
505 Recess
510 Conductive member
515 Recess
520 Conductive member
533 Support plate
541 Rectangular hole
542 Rectangular hole
543 Rectangular hole
544 Rectangular hole
562 Cavity
580c Rectangular hole
581c Rectangular hole
600 Lower housing
601 Bottom plate portion
602 Stepped portion
603 Side plate portion
610 Conductive member
620 Conductive member
633 Recess
641 Support plate
642 Support plate
643 Support plate
644 Support plate
650 Recess
651 Recess
652 Recess
661 Cavity
662 Cavity
663 Cavity
671 Positioning boss
672 Positioning boss
673 Positioning boss
680 Partition
690b Rectangular hole
705 Tilting plate portion
706 Tilting plate portion
710 shielding plate
712 shielding plate
720 shielding plate
801 Protrusion
810 Alignment plate
902 Protrusion
920 Alignment plate

## Claims

1. A high-speed transmission connector (6), comprising
a row of first contacts (1a-k),
a row of second contacts (1b-k),
a row of third contacts (1c-k),
a row of fourth contacts (1d-k),
an upper housing (500) that supports the row of first contacts (1a-k),
a lower housing (600) that supports the row of second contacts (1b-k), and
an inner housing (400) that supports both of the row of third contacts (1c-k) and the row of fourth contacts (1d-k),
the upper housing (500), the lower housing (600), and the inner housing (400) being assembled in such a manner that the upper housing (500) and the lower housing (600) face each other in a vertical direction with a gap therebetween, and the inner housing (400) is accommodated in the upper housing (500) and the lower housing (600); and the gap and an opening (412) of the inner housing (400) forming a slot (40) into which a header (7) of an external device as a communicating counterpart is to be fitted,
**characterised in that** the inner housing (400) is integrally formed.

2. The high-speed transmission connector according to claim 1, wherein
the upper housing (500) comprises a row of first grooves (2a-k), each of which extends longitudinally and which are arranged laterally,
the lower housing (600) comprises a row of second grooves (2b-k), each of which extends longitudinally and which are arranged laterally,
the inner housing (400) comprises a row of first holes (4c-k) and a row of second holes (4d-k), each of which extends longitudinally and which are vertically divided, the holes in each row being arranged laterally,
the first contacts (1a-k) are press-fitted into the first grooves (2a-k),
the second contacts (1b-k) are press-fitted into the second grooves (2b-k),
the third contacts (1c-k) are inserted into the first holes (2c-k), and
the fourth contacts (1d-k) are inserted into the second holes (4d-k).

3. The high-speed transmission connector according to claim 2, wherein
contact portions (11a) of the first contacts (1a-k) that are configured to contact a header (7) of an external device as a communicating counterpart and contact portions (11b) of the second contacts (1b-k) that are configured to contact the header (7) of the external device as a communicating counterpart face each other in a vertical direction in the slot (40), and
contact portions (11c) of the third contacts (1c-k) that are configured to contact the header (7) of the external device as a communicating counterpart and contact portions (11d) of the fourth contacts (1d-k) that are configured to contact the header (7) of the external device as a communicating counterpart face each other in a vertical direction in the slot (40) on the further rear side than a position where the contact portions (11a) of the first contacts (1a-k) and the contact portions (11b) of the second contacts (1b-k) face each other.

4. The high-speed transmission connector according to claim 2 or 3, wherein
the plurality of first contacts (1ab-k) press-fitted into the grooves in the row of the first grooves (2a-k) comprise a plurality of first ground contacts (1a-k (G)) and a plurality of first signal contacts (SIGs),
the high-speed transmission connector further comprises a first conductive member (510) comprising a horizontal plate portion (51) extending laterally and a plurality of protrusions (53) rising from one surface of the horizontal plate portion (51), and
the plurality of protrusions (53) of the first conductive member (510) are in contact with or electrically connected to the plurality of first ground contacts (1a-k (G)).

5. The high-speed transmission connector according to claim 4, wherein
the plurality of third contacts inserted into the holes in the row of first holes (2c-k), comprise a plurality of third ground contacts (1c-k (G)) and a plurality of third signal contacts (SIGs),
the high-speed transmission connector further comprises a third conductive member (610) comprising a horizontal plate portion (61) extending laterally and a plurality of protrusions (63) rising from one surface of the horizontal plate portion (61), and
the plurality of protrusions (63) of the third conductive member (610) are in contact with or electrically connected to the plurality of third ground contacts (1c-k (G)).

6. The high-speed transmission connector according to claim 5, wherein
the first conductive member (510) is arranged below the first contacts (1a-k),
the third conductive member (610) is arranged above the third contacts (1c-k), and
a first shielding plate (710) is arranged between the first conductive member (510) and the third conductive member (610).

7. The high-speed transmission connector according to any of claims 2 to 6, wherein
the plurality of second contacts (1b-k) press-fitted into the grooves in the row of second grooves (2b-k) comprise a plurality of second ground contacts (1b-k (G)) and a plurality of second signal contacts (SIGs),
the high-speed transmission connector further comprises a second conductive member (520) comprising a horizontal plate portion extending laterally and a plurality of protrusions (53) rising from one surface of the horizontal plate portion, and
the plurality of protrusions (53) of the second conductive member (520) are in contact with or electrically connected to the plurality of second ground contacts (1b-k (G)).

8. The high-speed transmission connector according to claim 7, wherein
the plurality of fourth contacts (1d-k) inserted into each hole in the row of second holes (4d-k) comprise a plurality of fourth ground contacts (1d-k (G)) and a plurality of fourth signal contacts (SIGs),
the high-speed transmission connector further comprises a fourth conductive member (620) comprising a horizontal plate portion extending laterally and a plurality of protrusions rising from one surface of the horizontal plate portion, and
the plurality of protrusions of the fourth conductive member (620) are in contact with or electrically connected to the plurality of fourth ground contacts (1d-k (G)).

9. The high-speed transmission connector according to claim 8, wherein
the second conductive member (520) is arranged above the second contacts (1b-k),
the fourth conductive member (620) is arranged below the fourth contact (1d-k), and
a second shielding plate (720) is arranged between the second conductive member (520) and the fourth conductive member (620).

10. The high-speed transmission connector according to any of claims 2 to 9, wherein
the lower housing (600) comprises a pair of side plate portions (603) facing each other in a lateral direction with the inner housing (400) therebetween,
a first alignment plate (810) comprising a row of grooves (8a-k) recessed in a comb blade shape is arranged on the rear side of the inner housing (400) between the pair of side plate portions (603), and
a rear part of a straight portion (12a) of the first contact (1a-k) press-fitted into the first groove (2a-k) of the upper housing (500) is advanced to a position above the first alignment plate (810) at which the rear part is hanged down, passes through the groove (8a-k) of the first alignment plate (810), and reaches a lower side of a gap between the pair of side plate portions (603) of the lower housing (600).

11. The high-speed transmission connector according to claim 10, wherein
a second alignment plate (920) comprising a row of grooves (9c-k) recessed in a comb blade shape is arranged on the rear side of the inner housing (400) between the pair of side plate portions (603) and on the front side of the first alignment plate (810),
a rear part of a straight portion (15c) of the third contact (1c-k) inserted into the first hole (2c-k) of the inner housing (400) is advanced to a position above the second alignment plate (920) at which the rear part is hanged down, passes through the groove (9c-k) of the second alignment plate (920), and reaches the lower side of the gap between the pair of side plate portions (603)of the lower housing (600).

## Patentansprüche

1. Hochgeschwindigkeitsgetriebeverbinder (6), umfassend
eine Reihe der ersten Kontakte (1a-k),
eine Reihe der zweiten Kontakte (1b-k),
eine Reihe der dritten Kontakte (1c-k),
eine Reihe der vierten Kontakte (1d-k),
ein oberes Gehäuse (500), das die Reihe der ersten Kontakte (1a-k) trägt,
ein unteres Gehäuse (600), das die Reihe der zweiten Kontakte (1b-k) unterstützt, und
ein inneres Gehäuse (400), das sowohl die Reihe der dritten Kontakte (1c-k) als auch die Reihe der vierten Kontakte (1d-k) trägt,
wobei das obere Gehäuse (500), das untere Gehäuse (600) und das innere Gehäuse (400) so zusammengebaut sind, dass das obere Gehäuse (500) und das untere Gehäuse (600) einander in vertikaler Richtung mit einem Spalt dazwischen zugewandt sind und das innere Gehäuse (400) in dem oberen Gehäuse (500) und dem unteren Gehäuse (600) untergebracht ist, und der Spalt und eine Öffnung (412) des inneren Gehäuses (400) einen Schlitz (40) bilden, in den ein Kopfteil (7) einer externen Vorrichtung als kommunizierendes Gegenstück einzufügen ist, **dadurch gekennzeichnet, dass** das innere Gehäuse (400) einteilig geformt ist.

2. Hochgeschwindigkeitsgetriebeverbinder nach Anspruch 1, wobei
das obere Gehäuse (500) eine Reihe der ersten Nuten (2a-k) umfasst, die sich jeweils in Längsrichtung erstrecken und seitlich angeordnet sind,
das untere Gehäuse (600) eine Reihe der zweiten Nuten (2b-k) umfasst, von denen sich jede in Längsrichtung erstreckt und die seitlich angeordnet sind,
das innere Gehäuse (400) eine Reihe erster Löcher (4c-k) und eine Reihe der zweiten Löcher (4d-k) umfasst, die sich jeweils in Längsrichtung erstrecken und vertikal geteilt sind, wobei die Löcher in jeder Reihe seitlich angeordnet sind,
die ersten Kontakte (1a-k) in die ersten Nuten (2a-k) eingedrückt werden,
die zweiten Kontakte (1b-k) in die zweiten Nuten (2b-k) eingedrückt werden,
die dritten Kontakte (1c-k) in die ersten Löcher (2c-k) eingesetzt werden, und
die vierten Kontakte (1d-k) in die zweiten Löcher (4d-k) eingesetzt werden.

3. Hochgeschwindigkeitsgetriebeverbinder nach Anspruch 2, wobei
Kontaktabschnitte (11a) der ersten Kontakte (1a-k), die so konfiguriert sind, dass sie einen Kopf (7) einer externen Vorrichtung als kommunizierendes Gegenstück kontaktieren, und Kontaktabschnitte (11b) der zweiten Kontakte (1b-k), die so konfiguriert sind, dass sie den Kopf (7) der externen Vorrichtung als kommunizierendes Gegenstück kontaktieren, einander in einer vertikalen Richtung in dem Schlitz (40) gegenüberstehen, und
Kontaktabschnitte (11c) der dritten Kontakte (1c-k), die so konfiguriert sind, dass sie den Kopf (7) der externen Vorrichtung als kommunizierendes Gegenstück kontaktieren, und Kontaktabschnitte (11d) der vierten Kontakte (1d-k), die so konfiguriert sind, dass sie den Kopf (7) der externen Vorrichtung als kommunizierendes Gegenstück kontaktieren, einander in einer vertikalen Richtung in dem Schlitz (40) auf der weiter hinten liegenden Seite gegenüberstehen als eine Position, in der die Kontaktabschnitte (11a) der ersten Kontakte (1a-k) und die Kontaktabschnitte (11b) der zweiten Kontakte (1b-k) einander gegenüberstehen.

4. Hochgeschwindigkeitsgetriebeverbinder nach Anspruch 2 oder 3, wobei
die Vielzahl der ersten Kontakte (1ab-k), die in die Nuten in der Reihe der ersten Nuten (2a-k) eingedrückt sind, umfassen eine Vielzahl von ersten Massekontakten (1a-k (G)) und eine Vielzahl von ersten Signalkontakten (SIGs),
der Hochgeschwindigkeitsgetriebeverbinder ferner ein erstes leitendes Element (510) umfasst, das einen horizontalen Plattenabschnitt (51), der sich seitlich erstreckt, und eine Vielzahl von Vorsprüngen (53) umfasst, die sich von einer Oberfläche des horizontalen Plattenabschnitts (51) erheben, und
die Vielzahl der Vorsprünge (53) des ersten leitenden Elements (510) in Kontakt mit der Vielzahl der ersten Erdungskontakten (1a-k (G)) stehen oder elektrisch mit ihnen verbunden sind.

5. Hochgeschwindigkeitsgetriebeverbinder nach Anspruch 4, wobei
die Vielzahl von dritten Kontakten, die in die Löcher in der Reihe der ersten Löcher (2c-k) eingesetzt sind, eine Vielzahl von dritten Massekontakten (1c-k (G)) und eine Vielzahl von dritten Signalkontakten (SIGs) umfassen,
der Hochgeschwindigkeitsgetriebeverbinder ferner ein drittes leitendes Element (610) umfasst, das einen horizontalen Plattenabschnitt (61), der sich seitlich erstreckt, und eine Vielzahl von Vorsprüngen (63) umfasst, die sich von einer Oberfläche des horizontalen Plattenabschnitts (61) erheben, und
die Vielzahl der Vorsprünge (63) des dritten leitenden Elements (610) in Kontakt mit der Vielzahl der dritten Erdungskontakten (1c-k (G)) stehen oder elektrisch mit ihnen verbunden sind.

6. Hochgeschwindigkeitsgetriebeverbinder nach Anspruch 5, wobei
das erste leitende Element (510) unterhalb der ersten Kontakte (1a-k) angeordnet ist,
das dritte leitende Element (610) über den dritten Kontakten (1c-k) angeordnet ist, und
eine erste Abschirmplatte (710) zwischen dem ersten leitenden Element (510) und dem dritten leitenden Element (610) angeordnet ist.

7. Hochgeschwindigkeitsgetriebeverbinder nach einem der Ansprüche 2 bis 6, wobei
die Vielzahl der zweiten Kontakte (1b-k), die in die Nuten in der Reihe der zweiten Nuten (2b-k) eingedrückt sind, umfassen eine Vielzahl von zweiten Massekontakten (1b-k (G)) und eine Vielzahl von zweiten Signalkontakten (SIGs), der Hochgeschwindigkeitsgetriebeverbinder ferner ein zweites leitendes Element (520) umfasst, das einen horizontalen Plattenabschnitt, der sich seitlich erstreckt, und eine Vielzahl von Vorsprüngen (53) umfasst, die sich von einer Oberfläche des horizontalen Plattenabschnitts erheben, und
die Vielzahl der Vorsprünge (53) des zweiten leitenden Elements (520) in Kontakt mit der Vielzahl der zweiten Erdungskontakten (1b-k (G)) stehen oder elektrisch mit ihnen verbunden sind.

8. Hochgeschwindigkeitsgetriebeverbinder nach Anspruch 7, wobei
die Vielzahl von vierten Kontakten (1d-k), die in jedes Loch in der Reihe der zweiten Löcher (4d-k) eingesetzt sind, eine Vielzahl von vierten Massekontakten (1d-k (G)) und eine Vielzahl von vierten Signalkontakten (SIGs) umfassen,
der Hochgeschwindigkeitsgetriebeverbinder ferner ein viertes leitendes Element (620) umfasst, das einen horizontalen Plattenabschnitt, der sich seitlich erstreckt, und eine Vielzahl von Vorsprüngen umfasst, die sich von einer Oberfläche des horizontalen Plattenabschnitts erheben, und
die Vielzahl der Vorsprünge des vierten leitenden Elements (620) in Kontakt mit der Vielzahl der vierten Erdungskontakten (1d-k (G)) stehen oder elektrisch mit ihnen verbunden sind.

9. Hochgeschwindigkeitsgetriebeverbinder nach Anspruch 8, wobei
das zweite leitende Element (520) oberhalb der zweiten Kontakte (1b-k) angeordnet ist, das vierte leitende Element (620) unterhalb des vierten Kontakts (1d-k) angeordnet ist, und
eine zweite Abschirmplatte (720) zwischen dem zweiten leitenden Element (520) und dem vierten leitenden Element (620) angeordnet ist.

10. Hochgeschwindigkeitsgetriebeverbinder nach einem der Ansprüche 2 bis 9, wobei
das untere Gehäuse (600) ein Paar seitliche Abschnitte (603) umfasst, die einander in seitlicher Richtung gegenüberliegen, wobei das innere Gehäuse (400) dazwischen liegt,
eine erste Ausrichtungsplatte (810), die eine Reihe von kammmesserförmig ausgesparten Nuten (8a-k) umfasst, auf der Rückseite des inneren Gehäuses (400) zwischen dem Paar von Seitenplattenabschnitten (603) angeordnet ist, und ein hinterer Teil eines geraden Abschnitts (12a) des ersten Kontakts (1a-k), der in die erste Nut (2a-k) des oberen Gehäuses (500) eingedrückt ist, in eine Position oberhalb der ersten Ausrichtungsplatte (810) vorgeschoben wird, in der der hintere Teil herunterhängt, durch die Nut (8a-k) der ersten Ausrichtungsplatte (810) hindurchgeht und eine untere Seite eines Spalts zwischen dem Paar von Seitenplattenabschnitten (603) des unteren Gehäuses (600) erreicht.

11. Hochgeschwindigkeitsgetriebeverbinder nach Anspruch 10, wobei
eine zweite Ausrichtungsplatte (920), die eine Reihe von kammmesserförmig ausgesparten Nuten (9c-k) umfasst, auf der Rückseite des inneren Gehäuses (400) zwischen dem Paar von Seitenplattenabschnitten (603) und auf der Vorderseite der ersten Ausrichtungsplatte (810) angeordnet ist,
ein hinterer Teil eines geraden Abschnitts (15c) des dritten Kontakts (1c-k), der in das erste Loch (2c-k) des inneren Gehäuses (400) eingesetzt ist, in eine Position oberhalb der zweiten Ausrichtungsplatte (920) vorgeschoben wird, in der der hintere Teil herunterhängt, durch die Nut (9c-k) der zweiten Ausrichtungsplatte (920) hindurchgeht und die untere Seite des Spalts zwischen dem Paar von Seitenplattenabschnitten (603) des unteren Gehäuses (600) erreicht.

## Revendications

1. Connecteur de transmission à grande vitesse (6), comprenant
une rangée de premiers contacts (1a-k),
une rangée de deuxièmes contacts (1b-k),
une rangée de troisièmes contacts (1c-k),
une rangée de quatrièmes contacts (1d-k),
un boîtier supérieur (500) qui supporte la rangée de premiers contacts (1a-k),
un boîtier inférieur (600) qui supporte la rangée de deuxièmes contacts (1b-k), et
un boîtier intérieur (400) qui supporte à la fois la rangée de troisièmes contacts (1c-k) et la rangée de quatrièmes contacts (1d-k),
le boîtier supérieur (500), le boîtier inférieur (600), et le boîtier intérieur (400) étant assemblés de manière à ce que le boîtier supérieur (500) et le boîtier inférieur (600) se fassent face dans une direction verticale avec un espace entre les deux, et le boîtier intérieur (400) est logé dans le boîtier supérieur (500) et le boîtier inférieur (600) ; et l'espace et une ouverture (412) du boîtier intérieur (400) formant une fente (40) dans laquelle un collecteur (7) d'un dispositif externe doit être ajusté en tant que contrepartie communicante,
**caractérisé en ce que** le boîtier intérieur (400) est formé d'un seul tenant.

2. Connecteur de transmission à grande vitesse selon la revendication 1, dans lequel
le boîtier supérieur (500) comprend une rangée de premières rainures (2a-k) qui s'étendent chacune longitudinalement et qui sont agencées latéralement,
le boîtier inférieur (600) comprend une rangée de deuxièmes rainures (2b-k) qui s'étendent chacune longitudinalement et qui sont agencées latéralement,
le boîtier intérieur (400) comprend une rangée de premiers trous (4c-k) et une rangée de deuxièmes trous (4d-k), qui s'étendent chacun longitudinalement et qui sont divisées verticalement, les trous dans chaque rangée étant agencés latéralement,
les premiers contacts (1a-k) sont ajustés par pression dans les premières rainures (2a-k),
les deuxièmes contacts (1b-k) sont ajustés par pression dans les deuxièmes rainures (2b-k),
les troisièmes contacts (1c-k) sont insérés dans les premiers trous (2c-k), et
les quatrièmes contacts (1d-k) sont insérés dans les deuxièmes trous (4d-k).

3. Connecteur de transmission à grande vitesse selon la revendication 2, dans lequel
des portions de contact (11a) des premiers contacts (1a-k) qui sont configurées pour entrer en contact avec un collecteur (7) d'un dispositif externe en tant que contrepartie communicante, et des portions de contact (11b) des deuxièmes contacts (1b-k) qui sont configurées pour entrer en contact avec le collecteur (7) du dispositif externe en tant que contrepartie communicante, se font face dans une direction verticale dans la fente (40), et des portions de contact (11c) des troisièmes contacts (1c-k) qui sont configurées pour entrer en contact avec le collecteur (7) du dispositif externe en tant que contrepartie communicante, et des portions de contact (11d) du quatrième contact (1d-k) qui sont configurées pour entrer en contact avec le collecteur (7) du dispositif externe en tant que contrepartie communicante, se font face dans une direction verticale dans la fente (40) sur le côté plus en arrière qu'une position où les portions de contact (11a) du premier contact (1a-k) et les portions de contact (11b) des deuxièmes contacts (1b-k) se font face.

4. Connecteur de transmission à grande vitesse selon la revendication 2 ou 3, dans lequel
la pluralité de premiers contacts (1ab-k) ajustés par pression dans les rainures de la rangée des premières rainures (2a-k) comprennent une pluralité de premiers contacts de masse (1a-k(G)) et une pluralité de premiers contacts de signal (SIG),
le connecteur de transmission à grande vitesse comprend en outre un premier élément conducteur (510) comprenant une portion de plaque horizontale (51) s'étendant latéralement, et une pluralité de saillies (53) s'élevant à partir d'une surface de la portion de plaque horizontale (51), et
la pluralité de saillies (53) du premier élément conducteur (510) sont en contact avec ou connectées électriquement à la pluralité de premiers contacts de masse (1a-k(G)).

5. Connecteur de transmission à grande vitesse selon la revendication 4, dans lequel
la pluralité de troisièmes contacts insérés dans les trous de la rangée de premiers trous (2c-k), comprennent une pluralité de troisièmes contacts de masse (1c-k(G)) et une pluralité de troisièmes contacts de signal (SIG),
le connecteur de transmission à grande vitesse comprend en outre un troisième élément conducteur (610) comprenant une portion de plaque horizontale (61) s'étendant latéralement et une pluralité de saillies (63) s'élevant à partir d'une surface de la portion de plaque horizontale (61), et
la pluralité de saillies (63) du troisième élément conducteur (610) sont en contact avec ou connectées électriquement à la pluralité de troisièmes contacts de masse (1c-k(G)).

6. Connecteur de transmission à grande vitesse selon la revendication 5, dans lequel
le premier élément conducteur (510) est agencé en dessous des premiers contacts (1a-k),
le troisième élément conducteur (610) est agencé au-dessus des troisièmes contacts (1c-k), et
une première plaque de blindage (710) est agencée entre le premier élément conducteur (510) et le troisième élément conducteur (610).

7. Connecteur de transmission à grande vitesse selon l'une des revendications 2 à 6, dans lequel
la pluralité de deuxièmes contacts (1b-k) ajustés par pression dans les rainures de la rangée de deuxièmes rainures (2b-k) comprennent une pluralité de deuxièmes contacts de masse (1b-k(G)) et une pluralité de deuxièmes contacts de signal (SIG),
le connecteur de transmission à grande vitesse comprend en outre un deuxième élément conducteur (520) comprenant une portion de plaque horizontale s'étendant latéralement et une pluralité de saillies (53) s'élevant à partir d'une surface de la portion de plaque horizontale, et
la pluralité de saillies (53) du deuxième élément conducteur (520) sont en contact avec ou connectées électriquement à la pluralité de deuxièmes contacts de masse (1b-k(G)).

8. Connecteur de transmission à grande vitesse selon la revendication 7, dans lequel
la pluralité de quatrièmes contacts (1d-k) insérés dans chaque trou de la rangée de deuxièmes trous (4d-k) comprennent une pluralité de quatrièmes contacts de masse (1d-k(G)) et une pluralité de quatrièmes contacts de signal (SIG),
le connecteur de transmission à grande vitesse comprend en outre un quatrième élément conducteur (620) comprenant une portion de plaque horizontale s'étendant latéralement et une pluralité de saillies s'élevant à partir d'une surface de la portion de plaque horizontale, et
la pluralité de saillies du quatrième élément conducteur (620) sont en contact avec ou connectées électriquement à la pluralité de quatrièmes contacts de masse (1d-k(G)).

9. Connecteur de transmission à grande vitesse selon la revendication 8, dans lequel
le deuxième élément conducteur (520) est agencé au-dessus des deuxièmes contacts (1b-k), le quatrième élément conducteur (620) est agencé en dessous du quatrième contact (1d-k), et
une deuxième plaque de blindage (720) est agencée entre le deuxième élément conducteur (520) et le quatrième élément conducteur (620).

10. Connecteur de transmission à grande vitesse selon l'une des revendications 2 à 9, dans lequel le boîtier inférieur (600) comprend une paire de portions de plaque latérale (603) se faisant face dans une direction latérale, le boîtier intérieur (400) se trouvant entre les deux,
une première plaque d'alignement (810) comprenant une rangée de rainures (8a-k) évidées en forme de lame de peigne est agencée sur le côté arrière du boîtier intérieur (400) entre les deux portions de plaque latérale (603), et
une partie arrière d'une portion droite (12a) du premier contact (1a-k) ajusté par pression dans la première rainure (2a-k) du boîtier supérieur (500) est avancée jusqu'à une position au-dessus de la première plaque d'alignement (810) à laquelle la partie arrière est suspendue, passe à travers la rainure (8a-k) de la première plaque d'alignement (810), et atteint un côté inférieur d'un espace entre les deux portions de plaque latérale (603) du boîtier inférieur (600).

11. Connecteur de transmission à grande vitesse selon la revendication 10, dans lequel
une deuxième plaque d'alignement (920) comprenant une rangée de rainures (9c-k) évidées en forme de lame de peigne est agencée sur le côté arrière du boîtier intérieur (400) entre les deux portions de plaque latérale (603) et sur le côté avant de la première plaque d'alignement (810),
une partie arrière d'une portion droite (15c) du troisième contact (1c-k) inséré dans le premier trou (2c-k) du boîtier intérieur (400) est avancée jusqu'à une position au-dessus de la deuxième plaque d'alignement (920) à laquelle la partie arrière est suspendue, passe à travers la rainure (9c-k) de la deuxième plaque d'alignement (920), et atteint le côté inférieur de l'espace entre les deux portions de plaque latérale (603) du boîtier inférieur (600).
